# EUROPÄISCHE PATENTSCHRIFT

(11) **EP 3 058 021 B1**
(45) Veröffentlichungstag und Bekanntmachung des Hinweises auf die Patenterteilung: **04.09.2019**
(21) Anmeldenummer: 14783889.0
(22) Anmeldetag: 14.10.2014
(51) Int. Cl.: C08K 5/00, C08K 7/00, C08K 9/02, C09C 1/62

(54) **KUNSTSTOFFZUSAMMENSETZUNG UMFASSEND WENIGSTENS EIN METALLPIGMENT, VERFAHREN ZUR HERSTELLUNG UND VERWENDUNG**
PLASTICS COMPOSITION COMPRISING AT LEAST ONE METAL PIGMENT, METHOD FOR PRODUCTION AND USE THEREOF
COMPOSITION DE MATIÈRE PLASTIQUE CONTENANT AU MOINS UN PIGMENT MÉTALLIQUE, PROCÉDÉ DE PRODUCTION ET UTILISATION ASSOCIÉS

(30) Priorität: 14.10.2013 DE 102013111317
(43) Veröffentlichungstag der Anmeldung: 24.08.2016
(73) Patentinhaber: Eckart GmbH, 91235 Hartenstein (DE)
(72) Erfinder: MÄDER, Dietmar, 90607 Rückersdorf (DE); SCHAAL, Martin, 91224 Pommelsbrunn (DE); TRENZ, Wolfgang, 91275 Auerbach (DE)
(74) Vertreter: Louis Pöhlau Lohrentz
(86) Internationale Anmeldenummer: PCT/EP2014/072048
(87) Internationale Veröffentlichungsnummer: WO 2015/055674

(56) Entgegenhaltungen:
- EP-A1- 1 256 437
- WO-A1-2009/144005
- US-A1- 2005 123 764
- US-A1- 2009 214 827
- US-A1- 2011 151 163
- DATABASE WPI Week 201317 Thomson Scientific, London, GB; AN 2012-N87054 XP002733342, -& CN 102 627 828 A (SHANGHAI KUMHO SUNNY PLASTICS CO LTD) 8. August 2012 (2012-08-08) in der Anmeldung erwähnt

## Beschreibung

Die vorliegende Erfindung betrifft eine mit plättchenförmigen Metallpigmenten pigmentierte Kunststoffzusammensetzung, Verfahren zur Herstellung derselben und Verwendung.

Flächen, die aus ästhetischen oder technischen Gründen dunkel eingefärbt oder beschichtet sind und die dem Sonnenlicht ausgesetzt sind, haben die meist unerwünschte Eigenschaft, sich je nach Farbtiefe mehr oder weniger stark aufzuheizen. So wird die solare Aufheizung dunkler Flächen beispielsweise im Fahrzeuginneren als äußerst unangenehm empfunden. Die dunklen Flächen heizen sich in Abhängigkeit vom solaren Absorptionsgrad mehr oder weniger stark auf und geben diese aufgenommene Wärme als Wärmestrahlung und über die Luftkonvektion beispielsweise in den Innenraum eines Fahrzeugs ab. Weiterhin trägt die relativ hohe Wärmespeicherfähigkeit dieser dunklen Flächen zur Erwärmung beispielsweise des Fahrzeuginneren bei. Je höher die Wärmekapazität und die Wärmeleitung in das Material sind, desto mehr Sonnenenergie kann in den Materialien gespeichert werden. Die Wärmeabgabe erfolgt dann langsam über die Wärmestrahlung und konvektiv über die Luft.

Die WO 02/12405 A2 betrifft ein flächiges Element mit dunkler Oberfläche und verminderter solarer Absorption, wobei die Reflexion des Substrats des flächigen Elements im Bereich des sichtbaren Lichtes von 380 bis 720 nm kleiner 50% und im Bereich des nahen Infrarot von 720 bis 1500 nm größer als 60% ist. Die Beschichtung des Substrats besteht aus einem Bindemittel, das im Spektralbereich von 380 bis 1500 nm eine Transparenz größer 70% hat und ersten Pigmenten, die im Bereich des sichtbaren Lichtes der Beschichtung eine Reflexion von kleiner als 50% und im Spektralbereich des nahen Infrarot der Beschichtung eine Transparenz von größer als 50% verleihen und/oder zweiten Pigmenten, die im Bereich des sichtbaren Lichtes der Beschichtung eine Reflexion kleiner als 50% und im Spektralbereich des nahen Infrarot der Beschichtung eine Reflexion größer 40% verleihen. Bei den ersten Pigmenten handelt es sich um organische Pigmente, die in einer Menge von 0,2 bis 20 Gew.-% in Bezug auf die Gesamtformulierung zur Herstellung der Beschichtung verwendet werden. Bei den zweiten Pigmenten handelt es sich um anorganische Pigmente, wie z.B. beschichtete, plättchenförmige Glimmerpigmente, welche in einer Menge von 4 bis 50 Gew.-% in Bezug auf die Gesamtformulierung zur Herstellung der Beschichtung verwendet werden. Das flächige Element hat im Bereich des nahen Infrarot eine hohe Reflexion, um trotz der dunklen Einfärbung im sichtbaren Bereich die Erwärmung unter Sonnenlicht zu verringern, was in Anwendungen erwünscht ist, die zwar dunkle Flächen aufweisen, sich aber unter Sonnenlicht nicht aufheizen sollen. Es werden keine Metalleffektpigmente zur Pigmentierung herangezogen.

Ein dunkles, flächiges Element mit niedriger solarer Absorption, d.h. eine Kombination aus einem Trägermaterial mit darin eingelagerten Komponenten, wird auch in der WO 2006/058782 A1 beansprucht. Das Element weist eine mittlere Reflexion im Wellenlängenbereich des sichtbaren Lichts von 400 bis 700 nm von kleiner 50% auf, die mittlere Reflexion im Wellenlängenbereich des nahen Infrarot von 700 bis 1000 nm ist größer 50%. Das Trägermaterial kann ein Kunststoff sein. Zu den eingelagerten Komponenten gehören u.a. Pigmente, jedoch keine Metallpigmente, und Farbstoffe. WO 00/24833 A1 offenbart eine spektralselektive Beschichtung, insbesondere für Ablageflächen in Kraftfahrzeugen, umfassend a) ein Bindemittel mit einer Transmission von 60% oder mehr im Wellenlängenbereich des nahen Infrarot von 0,7 bis 2,5 µm, und mit einer Transmission von 40% oder mehr im Wellenlängenbereich des thermischen Infrarot, b) erste Pigmente, die im Wellenlängenbereich von 0,35 bis 0,7 µm 40% oder mehr des sichtbaren Lichts absorbieren, im nahen Infrarot von 0,7 bis 2,5 µm eine Rückstreuung von 40% oder mehr aufweisen und im Wellenlängenbereich des thermischen Infrarot eine Absorption von 60% oder weniger haben, c) zweite Pigmente, die im Wellenlängenbereich des thermischen Infrarot eine Rückstreuung und/oder Reflexion von 40% oder mehr haben. Das Bindemittel kann hierbei ausgewählt sein aus thermoplastischen Materialien wie Polyolefinen und Polyvinylverbindungen. Die ersten Pigmente können anorganische oder organische Pigmente sein. Zu den zweiten Pigmenten zählen u.a. plättchenförmige Metalle oder Metalllegierungen, wie beispielsweise Eisen.

In WO 02/057374 A1 wird eine Beschichtung mit geringer solarer Absorption offenbart. Diese Beschichtung umfasst a) ein Bindemittel und/oder eine Bindemittelkombination, b) erste Pigmente, die im Wellenlängenbereich von 300 bis 2500 nm eine Transparenz größer 70% haben, deren Teilchengröße so gewählt ist, dass sie im Wellenlängenbereich des nahen Infrarot von 700 bis 1500 nm eine hohe Rückstreuung größer 70% haben und die im Bereich des thermischen Infrarot von 5 bis 50 µm eine Absorption größer 40% aufweisen, c) zweite Pigmente, die im Wellenlängenbereich des sichtbaren Lichts von 400 bis 700 nm spektralselektiv absorbieren und/oder im gesamten Wellenlängenbereich des sichtbaren Lichts mehr als 50% absorbieren, die im Wellenlängenbereich des nahen Infrarot von 70 bis 1500 nm eine Transparenz größer 50% haben und die im Bereich des thermischen Infrarot eine Absorption größer 40% aufweisen, und/oder d) dritte Pigmente, die im Spektralbereich des sichtbaren Lichts spektralselektiv absorbieren und/oder im gesamten Wellenlängenbereich des sichtbaren Lichts mehr als 50% absorbieren und die im Spektralbereich des nahen Infrarot reflektierend mit einer Reflexion größer 50% sind und die im Bereich des thermischen Infrarot einen Absorption größer 40% aufweisen, e) Füllstoffe. Die ersten und dritten Pigmente können anorganische Pigmente sein, bei den zweiten Pigmenten handelt es sich um organische Pigmente, Metallpigmente werden nicht erwähnt.

DE 25 44 245 A1 erwähnt die Möglichkeit IR-reflektierende Pigmente in Formmassen einzuarbeiten, wobei sich die Pigmente im Zuge der Verarbeitung weitgehend oberflächenparallel ausrichten. Gemäß EP 1 256 437 A1 ist jedoch die Ausrichtung der Teilchen in einem Kunststoffkörper aus z.B. extrudierter Formmasse mit darin gleichmäßig verteilten IR-reflektierenden Pigmenten nicht so gut wie bei einer coextrudierten oder lackierten separaten Schicht. Dies gilt gemäß EP 1 256 437 A1 insbesondere für Kunststoffkörper mit vergleichsweise komplizierter Geometrie, die von der einfachen Plattenform abweichen und bei deren Herstellung während der Extrusion unterschiedliche Schmelzeströmungsrichtungen und Scherkräfte auftreten, die die Pigmentteilchen in verschiedene Ausrichtungen zwingen und damit auch insgesamt höheren mechanischen Belastungen aussetzen.

EP 1 256 437 A1 betrifft ein Verfahren zur Herstellung eines lichtdurchlässigen, IR-reflektierenden Kunststoffkörpers, bestehend ganz oder zumindest teilweise aus einem schlagzähen thermoplastischen Kunststoff, enthaltend 0,01 bis 5 Gew.-% an reflektierenden Teilchen aus mit einem Metalloxid beschichteten plättchenförmigen Trägerpigmenten.

DE 100 10 538 A1 beschreibt einen schmutzabweisenden Beschichtungsstoff mit spektralselektiven Eigenschaften, welcher unter anderem ein Bindemittel mit guter UV-Resistenz und ersten, plättchenförmigen Teilchen umfasst. Letztere reflektieren im Wellenlängenbereich des thermischen Infrarot von 5 bis 100 µm. Bei den ersten plättchenförmigen Teilchen kann es sich beispielsweise um Metalle und/oder Metalllegierungen aus Aluminium, Aluminiumbronze, Eisen, Kupfer, Zink oder Zinn handeln. Die Bindemittel können z.B. aus thermoplastischen Materialien wie Polyolefinen oder Polyvinylverbindungen ausgewählt werden.

EP 0 673 980 A2 betrifft gefärbte Eisen- oder Eisenlegierungspigmente, welche bei erhöhter Temperatur in einer Sauerstoff enthaltenden Atmosphäre erhalten werden. Diese Pigmente können beispielsweise in Kunststoffen eingesetzt werden, um einen Graniteffekt nachzuahmen.

EP 1 541 636 A1 beschreibt eine thermoplastische Kunststoffzusammensetzung, welche 0,1 bis 15 Massenteile anorganisches Pigment mit infrarot reflektierenden Eigenschaften umfasst. Das anorganische Pigment kann mindestens eines der Elemente Fe, Cr, Mn, Cu, Co oder Ni enthalten und beispielsweise ausgewählt sein aus den Oxiden FeO, FeO(OH), Fe₂O₃, CrO, Cr₂O₃, MnO oder CuO.

EP 1 916 352 A2 offenbart ein Bedachungsprodukt, welches zwei koextrudierte Polymerschichten umfasst, wobei die erste Schicht im nahen Infrarot reflektiert und die zweite Schicht in diesem Bereich durchlässig ist. Beide Schichten können pigmentiert sein, wobei als solar-reflektierende Pigmente Metallpigmente oder mit Siliziumdioxid eingekapselte Metallplättchen zum Einsatz kommen können.

WO 2012/075369 A1 offenbart Zusammensetzungen, welche zur Formung von Produkten mit erhöhter Reflexion im nahen Infrarotbereich dienen. Als infrarot reflektierende Pigmente können Metalle oder Metalllegierungen aus z.B. Aluminium, Cobalt, Eisen, Mangan oder Zink eingesetzt werden.

CN 102627828 A beansprucht eine Kunststoffzusammensetzung, die 0,1 bis 2,0 Gewichtsteile Metallpigment, 0,1 bis 2,0 Gewichtsteile infrarot reflektierendes Pigment, 0,1 bis 2,0 Gewichtsteile Schmiermittel, 0,1 bis 1,0 Gewichtsteile Antioxidans, 0,1 bis 0,5 Gewichtsteile Toner enthält. Als Metallpigment kann unter anderem Aluminium- oder Silberpulver eingesetzt werden, als infrarot reflektierendes Pigment kann z.B. Eisen, Kupfer oder Zink verwendet werden.

US 2008/0138609 A1 offenbart eine Kunststoffzusammensetzung, die weniger als 5 Gew.-% infrarot reflektierende Pigmente umfasst. Als infrarot reflektierendes Pigment kommt ein anorganisches Farbpigment, wie in z.B. in US 6,036,763 A oder US 6,174,360 B1 beschrieben, zum Einsatz.

Aufgabe der vorliegenden Erfindung ist es, eine Zusammensetzung bereitzustellen, welche sich unter der Einstrahlung von Sonnenlicht nicht oder nur wenig selbst erwärmt. Die Zusammensetzung soll sich weiterhin durch ihre Witterungsstabilität auszeichnen. Diese Aufgabe wurde gelöst durch Bereitstellung einer Kunststoffzusammensetzung, welche wenigstens ein plättchenförmiges Metallpigment in einer Menge aus einem Bereich von 0,01 bis 25 Gew.-%, wenigstens ein Lichtschutzmittel in einer Menge aus einem Bereich von 0,01 bis 10 Gew.-% und wenigstens ein Antioxidans in einer Menge aus einem Bereich von 0,01 bis 2 Gew.-%, jeweils bezogen auf den Gewichtsanteil der Kunststoffzusammensetzung, umfasst, wobei das plättchenförmige Metallpigment ein Eisen- und/oder Eisenlegierungspigment ist.

Bevorzugte Ausführungsformen der erfindungsgemäßen Kunststoffzusammensetzung sind in den Unteransprüchen 2 bis 6 gegeben.

Weiterhin wurde die Aufgabe gelöst durch Bereitstellung eines Verfahrens zur Herstellung der erfindungsgemäßen Kunststoffzusammensetzung.

Gegenstand der Erfindung ist des Weiteren die Verwendung der erfindungsgemäßen Kunststoffzusammensetzung als Folie, Platte oder Profil.

Die Aufgabe der Erfindung wird des Weiteren durch die Verwendung wenigstens eines plättchenförmigen, mit Siliziumoxiden, Siliziumhydroxiden und/oder Siliziumoxidhydraten beschichteten Eisenpigmentes in einer Kunststoffzusammensetzung nach einem der Ansprüche 1 bis 6 gelöst. Das in der erfindungsgemäßen Kunststoffzusammensetzung einzusetzende plättchenförmige Metallpigment ist ein gegebenenfalls beschichtetes, Eisen- und/oder Eisenlegierungspigment. Bevorzugt werden beschichtete Eisen- und/oder Eisenlegierungspigmente in der erfindungsgemäßen Kunststoffzusammensetzung eingesetzt.

Unter Eisenpigmenten werden im Rahmen dieser Erfindung plättchenförmige Pigmente verstanden, welche einen Eisengehalt von ≥ 95 Gew.-%, bevorzugt ≥ 97 Gew.-%, besonders bevorzugt ≥ 99 Gew.-% und ganz besonders bevorzugt ≥ 99,5 Gew.-%, jeweils bezogen auf das Gesamtgewicht des Pigments, aufweisen. Als weitere Bestandteile können u.a. Kohlenstoff oder Sauerstoff zugegen sein.

Der Eisengehalt der Pigmente kann beispielsweise durch das Herstellungsverfahren und die Ausgangsmaterialien beeinflusst werden. Vorzugsweise werden plättchenförmige, gegebenenfalls beschichtete, Eisenpigmente, welche gemäß EP 1 251 152 A1, EP 1 251 153 A1 oder EP 2 157 138 A1 aus reduzierend behandeltem Carbonyleisenpulver hergestellt wurden, eingesetzt.

EP 1 251 152 A1 offenbart aus reduzierend behandeltem Carbonyleisenpulver hergestellte plättchenförmige Eisenpigmente, welche sowohl im dekorativen Bereich, wie z.B. Kunststoffeinfärbungen, Beschichtungen, Druck oder Kosmetik, als auch im funktionalen Bereich, wie z.B. im Wertschriftenbereich Verwendung finden.

EP 1 251 153 A1 beschreibt plättchenförmige, metalloxidbeschichtete Weicheisenpigmente, welche durch Verformung aus reduziertem Carbonyleisenpulver hergestellt werden. Im dekorativen Bereich werden die Pigmente z.B. im Lack, in Anstrichfarben, Kunststoffen, im Druck, in Glas, Keramik und in der Kosmetik eingesetzt. Im funktionalen Sektor werden die besonderen magnetischen Eigenschaften, die der elektrischen Leitfähigkeit, das Radarwellenabsorptionsvermögen oder das Vermögen elektromagnetischer Wellen genutzt.

EP 2 157 138 A1 beansprucht dünne, plättchenförmige Eisenpigmente, welche einen h₅₀-Wert aus einem Bereich von 10 bis 55 nm und einen h₉₀-Wert aus einem Bereich von 20 bis 80 nm aufweisen. Eisenpigmente mit einer derartigen Dickenverteilung verfügen über hohen Glanz bei gleichzeitiger Dunkelheit bzw. Schwärze. Die Eisenpigmente können z.B. in Beschichtungen, Anstrichen, Lacken, Druckfarben, Pulverlacken, Kunststoffen, kosmetischen Formulierungen sowie im Wertschriften- und Sicherheitsdruckbereich eingesetzt werden.

Unter Eisenlegierungspigmenten werden im Rahmen dieser Erfindung plättchenförmige Pigmente verstanden, welche einen Eisengehalt aus einem Bereich von ≥ 50 Gew.-% bis < 95 Gew.-%, bevorzugt aus einem Bereich von ≥ 60 Gew.-% bis < 95 Gew.-%, besonders bevorzugt aus einem Bereich von ≥ 70 Gew.-% bis < 95 Gew.-% und ganz besonders bevorzugt aus einem Bereich von ≥ 80 Gew.-% bis < 95 Gew.-%, jeweils bezogen auf das Gesamtgewicht des Pigments, aufweisen. Als Legierungsbestandteil kommen hierbei Chrom, Wolfram, Molybdän, Vanadium, Kobalt, Nickel, Niob, Silizium, Mangan oder Mischungen davon in Frage.

Die optional vorhandene Beschichtung der Metallpigmente umfasst oder besteht aus Metalloxiden, Metallhydroxiden und/oder Metalloxidhydraten von Silizium, Titan und/oder Zirkon. Alternativ umfasst oder besteht die optional vorhandene Beschichtung aus Polyacrylaten, Polyurethanen, Polycarbonaten, Polyestern oder Mischungen davon. Bevorzugt umfasst oder besteht die optional vorhandene Beschichtung aus Metalloxiden, Metallhydroxiden und/oder Metalloxidhydraten von Silizium.

Bei einer Ausführungsform weist der Metallkern der in die erfindungsgemäße Kunststoffzusammensetzung einzusetzenden plättchenförmigen Metallpigmente eine mittlere Dicke aus einem Bereich von 14 bis 500 nm, bevorzugt aus einem Bereich von 21 bis 340 nm und besonders bevorzugt aus einem Bereich von 36 bis 280 nm auf.

Bei besonders bevorzugten Ausführungsformen werden mit SiO₂ beschichtete plättchenförmige Eisenpigmente verwendet. Ganz besonders bevorzugt sind mit SiO₂ beschichtete Eisenpigmente mit einer mittleren Dicke des plättchenförmigen Eisenkerns aus einem Bereich von 20 bis unter 100 nm, insbesondere aus einem Bereich von 25 bis 60 nm. Mit derartig dünnen Eisenpigmenten pigmentierte erfindungsgemäße Kunststoffformulierungen weisen eine überraschend dunkle Eigenfarbe auf. Die Erfinder haben hierfür noch keine schlüssige Erklärung gefunden. Eisen reflektiert im sichtbaren Wellenlängenbereich bekanntlich geringer als Aluminium; dennoch ist die erstaunlich dunkle Eigenfarbe überraschend. Selbst in Kunststoffanwendungen, bei denen die plättchenförmigen Eisenpigmente sehr gut planparallel zur Kunststoffoberfläche orientiert sind, wird eine dunkle Eigenfarbe wahrgenommen. Dies ist umso erstaunlicher, als dass die planparallel orientierten plättchenförmigen Eisenpigmente zumindest im Glanzwinkel im sichtbaren Bereich eine verhältnismäßig hohe Reflexion aufweisen.

Aufgrund der geringen Dicke der Eiseneffektpigmente kann eine relativ geringe Konzentration aus einem Bereich von 0,1 bis 2,5 Gew.-%, bevorzugt aus einem Bereich von 0,15 bis 2,3 Gew.-% und besonders bevorzugt aus einem Bereich von 0,18 bis 2,1 Gew.-%, jeweils bezogen auf den Gewichtsanteil der Kunststoffzusammensetzung, verwendet werden.

Sofern eine dunkle Kunststoffzusammensetzung bereitgestellt werden soll, umfasst die erfindungsgemäße Kunststoffzusammensetzung vorzugsweise als Metallpigment ausschließlich Eisenpigmente, welche vorzugsweise mit Siliziumoxiden, Siliziumhydroxiden und/oder Siliziumoxidhydraten beschichtet sind, und keine Aluminiumpigmente. Überraschenderweise hat sich herausgestellt, dass bei dieser Ausführungsform die Infrarotreflexion dieser Kunststoffzusammensetzung ausreichend hoch ist, um die unerwünschte starke Temperaturerhöhung bei z.B. Sonneneinstrahlung zu unterbinden. Dies ist insofern überraschend, da die Infrarotreflexion von Eisen bekanntermaßen deutlich geringer als die von Aluminium ist. Zudem sind nur mit Eisenpigmenten pigmentierte Kunststoffzusammensetzungen wesentlich dunkler als mit Aluminiumpigmenten pigmentierte Kunststoffzusammensetzungen.

Diese dunkle Eigenfarbe in Kombination mit den hervorragenden Reflexionseigenschaften des Kunststoffs ist insbesondere vorteilhaft verwendbar in Formteilen wie beispielsweise in dunklen Automobilinnenteilen, wie Armaturenbretter, Türverkleidungen etc. sowie für Außenanwendungen, wie z.B. Kunststoffverkleidungen, Kunststofffensterrahmen, Kunststoffrohre oder Dachziegel aus Kunststoff.

Hier ist die Kombination der dunklen Eigenfarbe und den sehr guten Reflexionseigenschaften, die zu einem relativ geringen Anstieg der Oberflächentemperatur unter Sonneneinstrahlung führt, ein anwendungstechnisch sehr gefragtes Eigenschaftsprofil. Kunststoffzusammensetzungen, die konventionelle schwarze Pigmente in Kombination mit IR-reflektierenden Pigmenten umfassen, haben dieses Eigenschaftsprofil bisher nicht befriedigend gelöst.

Unter "dunkle Kunststoffzusammensetzung" wird im Sinne dieser Erfindung verstanden, dass große Teile des sichtbaren Lichts von der erfindungsgemäßen Kunststoffkomposition absorbiert werden und dadurch vom menschlichen Auge als dunkel wahrgenommen werden. Hierbei liegt die Helligkeit L* der dunklen Kunststoffzusammensetzung, bestimmt durch diffuse Farbmessung mit einem Farbmessgerät CR 310 der Firma Konica Minolta, bevorzugt bei ≤ 60, besonders bevorzugt bei ≤ 50 und ganz besonders bevorzugt bei ≤ 40. Obwohl die Kunststoffzusammensetzung vom menschlichen Auge durchaus als dunkel empfunden wird, sind die gemessen Helligkeitswerte überraschend hoch, was jedoch durch die Reflexion der Metallpigmente erklärbar ist.

Die dunkle Kunststoffzusammensetzung ist auch bei geringer Pigmentierung sehr deckend.

Die mittlere Dicke der plättchenförmigen Metallpigmente wird anhand eines gehärteten Lackfilmes, in dem die Pigmente im Wesentlichen planparallel zum Untergrund ausgerichtet sind, bestimmt. Hierzu wird ein Querschliff des gehärteten Lackfilmes unter einem Rasterelektronenmikroskop (REM) untersucht, wobei die Dicke von 100 Pigmenten bestimmt und statistisch gemittelt wird, wie dies in WO2004087816A2, S. 24 beschrieben ist.

Bei einer weiteren Ausführungsform kann die Metalloxide, Metallhydroxide und/oder Metalloxidhydrate umfassende oder die hieraus bestehende Beschichtung wenigstens ein Farbpigment in einer Menge von 20 bis 80 Gew.-%, bevorzugt in einer Menge von 30 bis 70 Gew.-% und besonders bevorzugt in einer Menge von 40 bis 65 Gew.-%, jeweils bezogen auf das Gesamtgewicht des Metallpigments, umfassen. Das wenigstens eine Farbpigment kann in der Beschichtung verteilt vorliegen oder auf der Beschichtung aufgebracht sein, vorzugsweise liegt das Farbpigment in der Beschichtung verteilt vor. Bevorzugt umfasst die Beschichtung dunkle Farbpigmente, vorzugsweise in Form von Partikeln, die im Wellenlängenbereich des nahen Infrarots (NIR) von 0,8 bis 2,5 µm eine geringe Absorption aufweisen. Besonders bevorzugt sind braune und/oder schwarze Farbpigmente, welche eine mittlere Primärkorngröße aus einem Bereich von 10 nm bis 1000 nm, bevorzugt aus einem Bereich von 20 nm bis 800 nm und besonders bevorzugt aus einem Bereich von 30 nm bis 400 nm aufweisen. Als Farbpigmente können beispielsweise Eisenoxide, Eisen-Mangan-Mischoxide, Chromeisenschwarz Cr₂O₃(Fe), Chromeisenbraun (Fe,Cr)₂O₃ und/oder (Zn,Fe)(Fe,Cr)₂O₄, Kupfer-Chrom-Spinelle vom Typ CuCr₂O₄, organische Farbpigmente aus der Gruppe der Perylene oder Mischungen davon. Derartige Pigmente können gemäß WO 2008/155038 A2 hergestellt werden.

WO 2008/155038 A2 betrifft ein dunkles, IR-Strahlung reflektierendes Pigment, welches einen plättchenförmigen, metallischen IR-Strahlung reflektierenden Kern. Die den Kern umhüllende, IR-Strahlung gering absorbierende Beschichtung umfasst dunkle Farbpigmente in, auf und/oder unter einer Matrix. Als plättchenförmiger Kern werden vorzugsweise plättchenförmige Pigmente aus Aluminium, Kupfer, Zink, Zinn, Titan, Eisen, Silber und/oder Legierungen dieser Metalle eingesetzt.

Unter Aluminiumpigmenten werden im Rahmen dieser Erfindung plättchenförmige Pigmente verstanden, welche einen Aluminiumgehalt von ≥ 97 Gew.-%, bevorzugt von ≥ 98 Gew.-%, besonders bevorzugt von ≥ 99 Gew.-% und ganz besonders bevorzugt von ≥ 99,5 Gew.-%, jeweils bezogen auf das Gesamtgewicht des Pigments, aufweisen. Als weitere Bestandteile können u.a. metallisches Eisen oder Sauerstoff zugegen sein.

Unter Aluminiumlegierungspigmenten werden im Rahmen dieser Erfindung plättchenförmige Pigmente verstanden, welche einen Aluminiumgehalt von < 97 Gew.-%, bevorzugt von 65 bis 95 Gew.-%, besonders bevorzugt von 70 bis 90 Gew.-% und ganz besonders bevorzugt von 75 bis 85 Gew.-%, jeweils bezogen auf das Gesamtgewicht des Aluminiumlegierungspigments, aufweisen. Als Legierungsbestandteile können eines oder mehrere von Aluminium verschiedene Metalle, vorzugsweise Eisen, Mangan, Kupfer, Vanadium, Chrom, Nickel, Cobalt, Silizium, Magnesium, Zink oder Titan, ausgewählt werden.

Die mittlere Teilchengröße D₅₀ der in der erfindungsgemäßen Kunststoffzusammensetzung einzusetzenden plättchenförmigen Metallpigmente liegt bevorzugt in einem Bereich von 1 bis 100 µm, weiter bevorzugt in einem Bereich von 3 bis 69 µm, besonders bevorzugt in einem Bereich von 4 bis 61 µm und ganz besonders bevorzugt in einem Bereich von 5 bis 58 µm.

Unter der mittleren Teilchengröße D₅₀ wird im Rahmen dieser Erfindung der D₅₀-Wert der Summenhäufigkeitsverteilung der volumengemittelten Größenverteilungsfunktion, wie sie durch Laserbeugungsmethoden erhalten werden, verstanden. Der D₅₀-Wert gibt an, dass 50 % der Metallpigmente einen Durchmesser aufweisen, der gleich oder kleiner als der gemessene Wert ist. Entsprechend gibt der D₉₀-Wert an, dass 90 % der Metallpigmente einen Durchmesser aufweisen, der gleich oder kleiner als der gemessene Wert ist. Weiterhin gibt der D₁₀-Wert an, dass 10% der Metallpigmente einen Durchmesser aufweisen, der gleich oder kleiner als der gemessene Werte ist. Bevorzugt wird für die Messung und Auswertung das Gerät der Fa. Quantachrome (Gerät: Cilas 1064) verwendet.

Bei einer weiteren Ausführungsform können die in die erfindungsgemäße Kunststoffzusammensetzung einzusetzenden Metallpigmente mit einer Oberflächenmodifizierung versehen sein, welche z.B. das Orientierungsverhalten der Metallpigmente beeinflussen kann. Als Oberflächenmodifizierung können ein oder mehrere Silane aufgebracht werden. Bei den Silanen kann es sich um Alkylsilane mit verzweigten oder unverzweigten Alkylresten mit 1 bis 24 C-Atomen, vorzugsweise 6 bis 18 C-Atomen handeln.

Bei den Silanen kann es sich aber auch um organofunktionelle Silane handeln, die eine chemische Anbindung an den Kunststoff ermöglichen. Diese organofunktionellen Gruppen können auch als Kupplungsgruppen oder funktionelle Bindungsgruppen bezeichnet werden und werden bevorzugt aus der Gruppe, die aus Hydroxy, Amino, Acryl, Methacryl, Vinyl, Epoxy, Isocyanat, Cyano und Mischungen davon besteht, ausgewählt.

Die vorzugsweise als Oberflächenmodifizierungsmittel verwendeten organofunktionellen Silane, die geeignete funktionelle Gruppen aufweisen, sind kommerziell verfügbar und werden beispielsweise von der Fa. Evonik hergestellt und unter dem Handelsnamen "Dynasylan" vertrieben. Weitere Produkte können von der Fa. Momentive (Silquest-Silane) oder von der Fa. Wacker, beispielsweise Standard- und α-Silane aus der GENIOSIL-Produktgruppe, bezogen werden.
Beispiele hierfür sind 3-Methacryloxypropyltrimethoxysilan (Dynasylan MEMO, Silquest A-174NT), Vinyltri(m)ethoxysilan (Dynasylan VTMO bzw. VTEO, Silquest A-151 bzw. A-171), Methyltri(m)ethoxy¬silan (Dynasylan MTMS bzw. MTES), 3-Mercaptopropyltrimethoxysilan (Dynasylan MTMO; Silquest A-189), 3-Glycidoxypropyltrimethoxysilan (Dynasylan GLYMO, Silquest A-187), Tris[3-(trimethoxysilyl)¬propyl]isocyanurat (Silquest Y-11597), Bis[3-(triethoxysilyl)propyl)]tetrasulfid (Silquest A-1289), Bis[3-(triethoxysilyl)propyldisulfid (Silquest A-1589), beta-(3,4-Epoxycyclohexyl)ethyltrimethoxysilan (Silquest A-186), Bis(triethoxysilyl)ethan (Silquest Y-9805), gamma-Isocyanatopropyltrimethoxysilan (Silquest A-Link 35, GENIOSIL GF40), Methacryloxymethyltri(m)ethoxysilan (GENIOSIL XL 33, XL 36), (Methacryloxymethyl)(m)ethyldimethoxysilan (GENIOSIL XL 32, XL 34), (Isocyanatomethyl)¬methyldimethoxysilan, (Isocyanatomethyl)trimethoxysilan, 3-(Triethoxysilyl)propylbernsteinsäure¬anhydrid (GENIOSIL GF 20), (Methacryloxymethyl)methyldiethoxysilan, 2-Acryloxyethylmethyl¬dimethoxysilan, 2-Methacryloxyethyltri¬methoxysilan, 3-Acryloxypropylmethyl¬dimethoxysilan, 2-Acryloxyethyltrimethoxysilan, 2-Methacryloxyethyl¬triethoxysilan, 3-Acryloxypropyltrimethoxysilan, 3-Acryloxypropyltripropoxy¬silan, 3-Methacryloxypropyltriethoxysilan, 3-Methacryloxypropyl¬triacetoxysilan, 3-Methacryloxypropylmethyldimethoxysilan, Vinyltrichlor¬silan, Vinyltrimethoxysilan (GENIOSIL XL 10), Vinyltris(2-methoxyethoxy)silan (GENIOSIL GF 58), Vinyltriacetoxysilan oder Mischungen davon.

Vorzugsweise werden als organofunktionelle Silane 3-Methacryloxypropyltrimethoxysilan (Dynasylan MEMO, Silquest A-174NT), Vinyltri(m)ethoxysilan (Dynasylan VTMO bzw. VTEO, Silquest A-151 bzw. A-171), Methyltri(m)ethoxysilan (Dynasylan MTMS bzw. MTES), beta-(3,4-Epoxycyclohexyl)ethyltri¬methoxysilan (Silquest A-186), Bis(triethoxysilyl)ethan (Silquest Y-9805), gamma-Isocyanatopropyltri¬methoxysilan (Silquest A-Link 35, GENIOSIL GF40), Methacryloxymethyltri(m)ethoxysilan (GENIOSIL XL 33, XL 36), (Methacryloxymethyl)(m)ethyldimethoxysilan (GENIOSIL XL 32, XL 34), 3-(Triethoxy¬silyl)propylbernsteinsäureanhydrid (GENIOSIL GF 20), Vinyltrimethoxysilan (GENIOSIL XL 10) und/ oder Vinyltris(2-methoxyethoxy)silan (GENIOSIL GF 58) verwendet.

Bei einer bevorzugten Ausführungsform enthält das organofunktionelle Silangemisch neben wenigstens einem Silan ohne funktionelle Bindungsgruppe wenigstens ein aminofunktionelles Silan. Die Aminofunktion ist eine funktionelle Gruppe, die mit den meisten in Bindemitteln vorhandenen Gruppen eine oder mehrere chemische Wechselwirkungen eingehen kann. Dies kann eine kovalente Bindung, wie z.B. mit Isocyanat- oder Carboxylatfunktionen des Bindemittels, oder Wasserstoffbrückenbindungen wie mit OH- oder COOR-Funktionen oder auch ionische Wechselwirkungen beinhalten. Eine Aminofunktion ist daher für den Zweck der chemischen Anbindung des Pigments an verschiedenartige Bindemittel sehr gut geeignet.

Bevorzugt werden hierzu folgende Verbindungen genommen: 3-Aminopropyltrimethoxysilan (Dynasylan AMMO; Silquest A-1110), 3-Aminopropyltriethoxysilan (Dynasylan AMEO), [3-(2-Aminoethyl)-aminopropyl]trimethoxysilan (Dynasylan DAMO, Silquest A-1120), [3-(2-Aminoethyl)-aminopropyl]triethoxysilan, triaminofunktionelles Trimethoxysilan (Silquest A-1130), Bis-(gamma-trimethoxysilylpropyl)amin (Silquest A-1170), N-Ethyl-gammaaminoisobutyltrimethoxysilan (Silquest A-Link 15), N-Phenyl-gamma-aminopropyl¬trimethoxysilan (Silquest Y-9669), 4-Amino-3,3-dimethylbutyltrimethoxysilan (Silquest A-1637), N-Cyclohexylaminomethylmethyldiethoxysilan (GENIOSIL XL 924), N-Cyclohexylaminomethyltriethoxysilan (GENIOSIL XL 926), N-Phenylaminomethyl-trimethoxysilan (GENIOSIL XL 973) oder deren Mischungen.

Bei einer weiterhin bevorzugten Ausführungsform ist das Silan ohne funktionelle Bindungsgruppe ein Alkylsilan. Das Alkylsilan weist vorzugsweise die Formel R_{(4-z)}Si(X)_{z} auf. Hierbei ist z eine ganze Zahl von 1 bis 3, R ist eine substituierte oder unsubstituierte, unverzweigte oder verzweigte Alkylkette mit 10 bis 22 C-Atomen und X steht für eine Halogen- und/ oder Alkoxygruppe. Bevorzugt sind Alkylsilane mit Alkylketten mit mindestens 12 C-Atomen. R kann auch zyklisch mit Si verbunden sein, wobei in diesem Fall z üblicherweise 2 ist.

Neben den erwähnten Silanen bzw. Silangemischen können auch weitere organischchemische Modifizierungsmittel, wie beispielsweise substituierte oder nicht substituierte Alkylreste, Polyether, Thioether, Siloxane, etc. und Mischungen davon zur Anwendung kommen.

Als Kunststoffkomponente können im Rahmen der vorliegenden Erfindung beispielsweise Polyolefine, Polystyrole, Polyester, Polyether, Polyamide, Poly(meth)acrylate, thermoplastische Polyurethane, Polysulfone, Polyacetale, Polyvinylchlorid, Mischungen oder Copolymere davon, eingesetzt werden.Vorzugsweise werden Polypropylen (PP), Polyethylen (PE), Polyamid (PA), Polybutylenterephthalat (PBT), Polyethylenterephthalat (PET), glykolmodifizierte Polycyclohexylenmethylenterephthalate (PCTG), Polysulfon (PSU), Polymethylmethacrylat (PMMA), thermoplastisches Polyurethan (TPU), AcrylnitrilButadien-Styrol (ABS), Acrylnitril-Styrol-Acrylsäureester (ASA), Acrylnitril-Ethylen-Propylen-Styrol (AES), Styrol-Maleinsäureanhydrid (SMA) oder schlagzähePolystyrole (HIPS) eingesetzt.

Bei einer weiteren Ausführungsform können in der erfindungsgemäßen Kunststoffzusammensetzung folgende Kunststoffe Verwendung finden:
1. Polymere basierend auf/abgeleitet von Monoolefinen und Diolefinen, z.B. Polypropylen (PP), Polyisobutylen (PIB), Polybut-1-en, Poly-4-methylpent-1-en (PMP), Polyvinylcyclohexan (PVCH), Polyisopren oder Polybutadien, als auch Polymere von Cycloolefinen, z.B. Cyclopentene oder Norbornene, Polyethylene (optional auch vernetzt), z.B. High Density Polyethylen (HDPE), High Density High Molecular Weight Polyethylen (HDPE-HMW), High Density and Ultrahigh Molecular Weight Polyethylene (HDPE-UHMW), Medium Density Polyethylene (MDPE), Low Density Polyethylene (LDPE), Linear Low Density Polyethylene (LLDPE), (VLDPE) and (ULDPE). Die Polymere von Monoolefinen, vereinfacht dargestellt im diesem Absatz, insbesondere Polyethylen und Polypropylen, können durch verschiedene Verfahren hergestellt werden:
   a) Radikalische Polymerisation (normalerweise unter hohem Druck und bei erhöhter Temperatur).
   b) Katalytische Polymerisation unter Verwendung eines Katalysators normalerweise enthaltend ein oder mehrere Metalle der Gruppe IVb, Vb, VIb or VIII des Periodensystems. Diese Metalle haben üblicherweise einen oder mehrere Liganden, typischerweise Oxide, Halogenide, Alkoholate, Ester, Ether, Amine, Alkyle, Alkenyl und/oder Aryle, die entweder π- oder σ-koordiniert sind. Diese Metallkomplexe können frei oder an ein Substrat gebunden vorliegen, typischerweise an ein aktiviertes Magnesiumchlorid, Titan(III)chlorid, Aluminium- oder Siliciumoxid. Diese Katalysatoren können löslich oder unlöslich sein im Polymerisationsmedium. Die Katalysatoren können selbst benutzt werden oder weitere Aktivatoren können eingesetzt werden, typischerweise Metallalkyle, Metallhydride, Metall-Alkylhalogenide, Metall-Alkyloxide oder Metall-Alkyloxane, wobei die genannten Metalle aus den Elementgruppen Ia, IIa und/oder IIIa des Periodensystems stammen. Die Aktivatoren können weiter modifiziert werden mit Estern, Ether, und Aminen oder Silylethergruppen. Diese Katalysatorsysteme werden üblicherweise bezeichnet als Phillips-, Standard Oil Indiana-, Ziegler-Natta-, TNZ (DuPont), Metallocen-Katalysatoren oder Single Site Catalysts (SSC).
2. Mischungen von Polymeren erwähnt unter 1), z.B. Mischungen von Polypropylen mit Polyisobutylen, Polypropylen mit Polyethylen (z.B. PP/HDPE, PP/LDPE) und Mischungen von unterschiedlichen Typen von Polyethylen (z.B. LDPE/HDPE).
3. Copolymere von Monoolefinen und Diolefinen miteinander oder mit anderen Vinylmonomeren, z.B. Ethylen/Propylen-Copolymere, Linear Low Density Polyethylen (LLDPE) und Mischungen davon mit Low Density Polyethylen (LDPE), Propylen/But-1-en-Copolymere, Propylen/Isobutylen-Copolymere, Ethylen/But-1-en-Copolymere, Ethylen/Hexen-Copolymere, Ethylen/Methylpenten-Copolymere, Ethylen/Hepten-Copolymere, Ethylen/Octen-Copolymere, Ethylen/Vinylcyclohexan-Copolymere, Ethylen/Cycloolefin-Copolymere (z.B. Ethylen/Norbornen wie COC), Ethylen/1-Olefin-Copolymere, wobei das 1-Olefin in-situ generiert wird; Propylen/Butadien-Copolymere, Isobutylen/Isopren-Copolymere, Ethylen/Vinylcyclohexen-Copolymere, Ethylen/Alkylacrylat-Copolymere, Ethylen/Alkylmethacrylat-Copolymere, Ethylen/Vinylacetat-Copolymere oder Ethylen/Acrylsäure-Copolymere und deren Salze (Ionomere) als auch Terpolymere von Ethylen mit Propylen und einem Dien wie Hexadien, Dicyclopentadien oder Ethylidennorbornen; und Mischungen von solchen Copolymeren miteinander und mit unter 1) erwähnten Polymeren, z.B. Polypropylen/Ethylen-Propylen-Copolymere, LDPE/Ethylen-Vinylacetat-Copolymere (EVA), LDPE/Ethylen-Acrylsäure-Copolymere (EAA), LLDPE/EVA, LLDPE/EAA und alternierende oder statistische Polyalkylen/Kohlenstoffmonoxid-Copolymere und Mischungen daraus mit anderen Polymeren, z.B. Polyamiden.
4. Kohlenwasserstoffharze (z.B. C₅-C₉) inklusive hydrierte Modifikationen davon (z.B. Klebrigmacher) und Mischungen von Polyalkylenen und Stärke;
   Die oben erwähnten Homopolymere und Copolymere können auch eine beliebige Stereostruktur aufweisen, z.B. syndiotaktisch, isotaktisch, hemi-isotaktisch oder ataktisch; wobei ataktische Polymere bevorzugt sind. Stereoblockpolymere sind auch enthalten.
5. Polystyrol, Poly-(p-Methylstyrol), Poly-(α-Methylstyrol).
6. Aromatische Homopolymere und Copolymere, abgeleitet von vinylaromatischen Monomeren beinhaltend Styrol, α-Methylstyrol, alle Isomere von Vinyltoluol, insbesondere p-Vinyltoluol, alle Isomere von Ethylstyrol, Propylstyrol, Vinylbiphenyl, Vinylnaphthalen und Vinylanthracen, sowie Mischungen davon. Homopolymere und Copolymere können eine beliebige Stereostruktur ausbilden, die syndiotaktisch, isotaktisch, hemi-isotaktisch oder ataktisch sein kann, wobei ataktische Polymere bevorzugt sind. Stereoblockpolymere sind inbegriffen.
   a) Copolymere beinhaltend die erwähnten vinylaromatischen Monomere und Comonomere aus Ethylen, Propylen, Dienen, Nitrilen, Säuren, Maleinsäureanhydrid, Maleimid, Vinylacetat und Vinylchlorid oder Acrylderivate und Mischungen daraus, z.B. Styrol/Butadien, Styrol/Acrylonitril, Styrol/Ethylen (Interpolymere), Styrol/Alkylmethacrylat, Styrol/Butadien/Alkylacrylat, Styrol/Butadien/Alkylmethacrylat, Styrol/Maleinsäureanhydrid, Styrol/Acrylnitril/Methylacrylat; Gemische von Styrolcopolymeren mit hoher Schlagfestigkeit und weiterem Polymer, z.B. Polyacrylat, Dienpolymer oder Ethylen/Propylen/Dienterpolymer; und Styrolblockcopolymere wie Styrol/Butadien/Styrol, Styrol/Isopren/Styrol, Styrol/Ethylen/Butylen/Styrol oder Styrol/Ethylen/Propylen/Styrol.
   b) Hydrierte aromatische Polymere basierend auf der Hydrierung von unter 6.) erwähnten Polymeren, insbesondere Polycyclohexylethylen (PCHE), hergestellt durch Hydrierung von ataktischem Polystyrol, oft auch als Polyvinylcyclohexan (PVCH) bezeichnet.
   c) Hydrierte aromatische Polymere basierend auf der Hydrierung von unter 6.a) erwähnten Polymeren. Homopolymere und Copolymere können eine beliebige Stereostruktur haben, die syndiotaktisch, isotaktisch, hemi-isotaktisch oder ataktisch sein kann, wobei ataktische Polymere bevorzugt sind. Stereoblockpolymere sind inbegriffen.
7. Pfropf-Copolymere von vinylaromatischen Monomeren, wie Styrol oder α-Methylstyrol, z.B. Styrol auf Polybutadien, Styrol auf Polybutadien-Styrol oder Polybutadien-Acrylonitril-Copolymere; Styrol und Acrylonitril (oder Methacrylnitril) auf Polybutadien; Styrol, Acrylnitril und Methylmethacrylat auf Polybutadien; Styrol und Maleinsäureanhydrid auf Polybutadien; Styrol, Acrylonitril und Maleinsäureanhydrid oder Maleimid auf Polybutadien; Styrol und Maleimid auf Polybutadien; Styrol und Alkylacrylate oder -methacrylate auf Polybutadien; Styrol und Acrylnitril auf Ethylen/Propylen/Dien-Terpolymeren; Styrol und Acrylnitril auf Polyalkylacrylaten oder Polyalkylmethacrylaten, Styrol und Acrylnitril auf Acrylat/Butadien-Copolymeren, als auch Mischungen davon mit unter 6) aufgeführten Copolymeren, z.B. die Copolymer Mischungen, bekannt als ABS-, MBS-, ASA- oder AES-Polymere.
8. Halogen-haltige Polymere, wie Polychloropren, chlorierte Elastomere, chloriertes und bromiertes Copolymer von Isobutylen-Isopren (Halogenbutyl-Kautschuk), chloriertes oder sulfochloriertes Polyethylen, Copolymere von Ethylen und chloriertem Ethylen, Epichlorhydrin-Homo- und Copolymere, insbesondere Polymere von Halogen-haltigen Vinylverbindungen, z.B. Polyvinylchlorid (PVC), Polyvinylidenchlorid, Polyvinylfluorid, Polyvinylidenfluorid, als auch Copolymere daraus wie Vinylchlorid/Vinylidenchlorid, Vinylchlorid/Vinylacetat oder Vinylidenchlorid/Vinylacetat-Copolymere.
9. Polymere, abgeleitet von α,β-ungesättigten Säuren und Derivaten davon, wie Polyacrylate und Polymethacrylate; Polymethylmethacrylate, Polyacrylamide und Polyacrylonitrile, schlagzähmodifiziert mit Butylacrylat.
10. Copolymere der unter 9) erwähnten Monomere miteinander oder mit anderen ungesättigten Monomeren, z.B. Acrylonitril/Butadien-Copolymere, Acrylnitril/Alkylacrylat-Copolymere, Acrylnitril/Alkoxyalkylacrylat- oder Acrylonitril/Vinylhalogenid-Copolymere oder Acrylnitril/Alkylmethacrylat/Butadien-Terpolymere.
11. Polymere, abgeleitet von ungesättigten Alkoholen und Aminen oder Acylderivaten oder Acetalen davon, z.B. Polyvinylalkohol (PVOH), Polyvinylacetat (PVAc), Polyvinylstearat, Polyvinylbenzoat, Polyvinylmaleat, Polyvinylbutyral (PVB), Polyallylphthalat oder Polyallylmelamin; als auch ihre Copolymere mit unter 1) erwähnten Olefinen.
12. Homopolymere und Copolymere von cyclischen Ethern, wie Polyalkylenglycole, Polyethylenoxid, Polypropylenoxid oder Copolymere davon mit Bisglycidylethern.
13. Polyacetale, wie Polyoxymethylen (POM) und jene Polyoxymethylene, die Ethylenoxid als Comonomer enthalten; Polyacetale, modifiziert mit thermoplastischen Polyurethanen (TPU), Acrylaten oder MBS.
14. Polyphenylenoxide (PPO) und Polyphenylensulfide und Mischungen von Polyphenylenoxiden mit Styrolpolymeren oder -polyamiden.
15. Polyamide und Copolyamide, abgeleitet von Diaminen und Dicarbonsäuren und/oder von Aminocarbonsäuren oder den korrespondierenden Lactamen, z.B. Polyamid 4, Polyamid 6, Polyamid 6/6, 6/10, 6/9, 6/12, 4/6, 12/12, Polyamid 11, Polyamid 12, aromatische Polyamide ausgehend von m-Xyloldiamin und Adipinsäure; Polyamide hergestellt aus Hexamethylendiamin und Isophthalsäure und/oder Terephthalsäure und mit oder ohne ein Elastomer als Modifizierungsmittel, z.B. Poly-2,4,4,-trimethylhexamethylenterephthalamid oder Poly-m-phenylenisophthalamid; und auch Blockcopolymere von den erwähnten Polyamiden mit Polyolefinen, Olefin-Copolymeren, Ionomeren oder chemisch gebundenen oder gepfropften Elastomeren; oder mit Polyethern, z.B. mit Polyethylenglycol, Polypropylenglycol oder Polytetramethylenglycol; als auch Polyamide oder Copolyamide modifiziert mit EPDM oder ABS; und Polyamide, die während Verarbeitung kondensiert werden (RIM-Polyamidsysteme).
16. Polyharnstoffe, Polyimide, Polyamidimide, Polyetherimide, Polyesterimide, Polyhydantoine und Polybenzimidazole.
17. Polyester, abgeleitet von Dicarbonsäuren und Diolen und/oder von Hydroxycarbonsäuren oder den entsprechenden Lactonen, z.B. Polyethylenterephthalat, Polybutylenterephthalat, Poly(1,4-Dimethylolcyclohexanterephthalat), Polyalkylennaphthalat (PAN) und Polyhydroxybenzoate, als auch Blockcopolyetherester basierend auf/abgeleitet von Hydroxy-terminierten Polyethern; und auch Polyester, modifiziert mit Polycarbonaten oder MBS.
18. Polyphenylenoxide und Polyphenylensulfide, und Mischungen von Polyphenylenoxiden mit Styrolpolymeren oder -polyamiden.
19. Polyurethane, abgeleitet von Hydroxyl-terminierten Polyethern, Polyestern oder Polybutadienen einerseits und aromatischen Polyisocyanaten andererseits, als auch Vorläufern davon.
20. Polyharnstoffe, Polyimide, Polyamidimide, Polyetherimide, Polyesterimide, Polyhydantoine und Polybenzimidazole.
21. Polyester, abgeleitet von Dicarbonsäuren und Diolen und/oder abgeleitet von Hydroxycarbonsäuren der korrespondierenden Lactone, z.B. Polyethylenterephthalat, Polybutylenterephthalat, Poly(1,4-Dimethylolcyclohexanterephthalat), Polyalkylennaphthalat (PAN) und Polyhydroxybenzoate, als auch Blockcopolyetherester, abgeleitet von Hydroxyl-terminierten Polyethern; als auch Polyester modifiziert mit Polycarbonaten oder MBS.
22. Polycarbonate und Polyestercarbonate.
23. Polysulfone, Polyethersulfone und Polyetherketone.
24. Vernetzte Polymere, abgeleitet von Aldehyden einerseits und Phenolen, Harnstoffen und Melaminen andererseits, wie Phenol/Formaldehydharze, Harnstoff/Formaldehydharze und Melamin/Formaldehydharze.
25. Trocknende und nicht-trocknende Alkydharze.
26. Ungesättigte Polyesterharze, abgeleitet von Copolyestern von gesättigten und ungesättigten Dicarbonsäuren mit Polyalkoholen und Vinylverbindungen als Vernetzungsmittel, und auch Halogen-enthaltende Modifikationen mit geringer Entflammbarkeit.
27. Vernetzbare Acrylharze abgeleitet von substituierten Acrylaten, z.B. Epoxyacrylate, Urethanacrylate oder Polyesteracrylate.
28. Alkydharze, Polyesterharze und Acrylatharze, die vernetzt sind mit Melaminharzen, Harnstoffharzen, Isocyanaten, Isocyanuraten, Polyisocyanaten oder Epoxidharzen.
29. Vernetze Epoxidharze, abgeleitet von aliphatischen, cycloaliphatischen, heterocyclischen oder aromatischen Glycidylverbindungen, z.B. Produkte von Diglycidylethern von Bisphenol A und Bisphenol F, die mit gebräuchlichen Härtern wie Anhydriden oder Aminen, mit oder ohne Beschleuniger vernetzt sind.
30. Natürliche Polymere, wie Cellulose, Kautschuk, Gelatine und chemisch modifizierte homologe Derivate davon, z.B. Celluloseacetate, Cellulosepropionate und Cellulosebutyrate, oder die Celluloseether wie Methylcellulose; als auch Kolophonium und dessen Derivate.
31. Gemische der zuvor erwähnten Polymere (Polymerblends), z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/TPU, PC/TPU, POM/Acrylat, POM/MBS, PPO/HIPS, PPO/PA 6.6 und Copolymere, PA/HDPE, PA/PP, PA/PPO, PBT/PC/ABS oder PBT/PET/PC.
32. Natürlich vorkommende und synthetische organische Materialien, die vollständig monomere Verbindungen sind oder Mischungen von solchen Verbindungen, z.B. mineralische Öle, tierische und pflanzliche Fette, Öle und Wachse oder Öle, Fette und Wachse basierend auf synthetischen Estern (z.B. Phthalate, Adipate, Phosphate oder Trimellitate) und auch Mischungen von synthetischen Estermischungen mit Mineralöl in allen Gewichtsverhältnissen, typischerweise denen von Spinnmitteln, als auch als wässrige Emulsionen von diesen Materialien.
33. Wässrige Emulsionen von natürlichem oder synthetischem Kautschuk, z.B. Naturlatex oder Latizes von carboxylierten Styrol/Butadien Copolymeren.

Bevorzugt werden als Kunststoffkomponente eingesetzt Polypropylen (PP), PP-Copolymere, Polyethylen (PE), PE-Copolymere, HDPE, LDPE, LLDPE oder andere Polyolefine, Polystyrol (PS), SAN, HIPS, Acrylnitril/Butadien/Styrol (ABS), ASA oder andere Styrolcopolymere, Polycarbonat, Polymerblends wie PC/ABS oder PC/ASA, Polyoxymethylen (POM), Polyamide (PA6, PA6.6, PA11, PA12, etc.), Polyester wie PET, PBT, Polyurethane, thermoplastische Polyurethane (TPU), Polymethylmethacrylat (PMMA) sowie andere Acrylatpolymere, Acrylatcopolymere, Polyvinylchlorid (PVC), Silikone und Elastomere.

Die erfindungsgemäßen Kunststoffzusammensetzungen können neben den einzusetzenden Metallpigmenten Additive, wie Pigmente, Farbstoffe, Lichtschutzmittel, Antioxidantien, Co-Stabilisatoren wie Säurefänger (z.B. Metall-Stearate, Hydrotalcite, Metalloxide, Metalldesaktivatoren, Phosphite), Weichmacher, Flammschutzmittel, oder Mischungen davon, enthalten.

Zur Erzielung spezieller Farbeffekte können den erfindungsgemäßen Kunststoffzusammensetzungen Farbmittel und/oder Effektpigmente und/oder Mischungen hiervon zugesetzt werden. Bevorzugt werden Farbmittel und/oder Effektpigmente und/oder Mischungen hiervon in einer Menge aus einem Bereich von 0,01 bis 10 Gew.-%, besonders bevorzugt aus einem Bereich von 0,1 bis 5 Gew.-% und ganz besonders bevorzugt aus einem Bereich von 1 bis 5 Gew.-%, jeweils bezogen auf den Gewichtsanteil der Kunststoffzusammensetzung, eingesetzt.

Als Effektpigmente können beispielsweise handelsübliche Perlglanzpigmente auf der Basis von beschichteten natürlichen Glimmerplättchen, auf der Basis von beschichteten synthetischen Glimmerplättchen, wie z.B. die Produktgruppe SYMIC, Fa. ECKART GmbH, oder auf der Basis von beschichteten Glasplättchen, wie z.B. die Produktgruppe LUXAN, Fa. ECKART GmbH, verwendet werden. Alternativ oder zusätzlich können gegebenenfalls beschichtete Metalleffektpigmente basierend auf Kupfer- oder Goldbronzeplättchen, z.B. aus den Produktgruppen STANDART, STAPA, SILVERSHINE, jeweils Fa. ECKART GmbH, eingesetzt werden. Die Farbmittel können auch aus anorganischen oder organischen Pigmenten sowie organischen Farbstoffen ausgewählt sein, welche über die nachstehenden Colour Indizes charakterisiert sind.

| | |
|---|---|
| CI Pigment White: | 4, 5, 7, |
| CI Pigment Yellow: | 1, 3, 5, 10, 12, 13, 14, 16, 17, 23, 42, 55, 61, 62, 65, 73, 74, 81, 83, 93, 94, 95, 108, 109, 110, 111, 114, 120, 126, 127, 128, 129, 138, 139, 147, 150, 151, 154, 155, 168, 173, 174, 175, 176, 177, 180, 181, 183, 185, 188, 191, 191:1, 194, 199, 214, |
| CI Solvent Yellow | 16, 19, 21, 25, 29, 32, 34, 47, 56, 79, 81, 82, 88, 89, 93, 98, 129, 130, 135, 145, 160:, 162, 174, |
| CI Pigment Orange: | 5, 13, 31, 34, 36, 37, 38, 43, 46, 51, 61, 62, 64, 65, 67, 68, 71, 72. 74, |
| CI Solvent Orange | 3, 5, 6, 11, 14, 25, 41, 54, 56, 59, 60, 62, 86, 99, 102, |
| CI Pigment Red: | 2, 3, 4, 5, 8, 9, 10, 12, 14, 23, 38, 48:1,48:2, 48:3,48:4, 49, 52, 53:1, 53:3, 57:1, 81, 88, 95, 101, 102, 112, 122, 123, 144, 146, 149, 166, 170, 171, 175, 176, 177, 178, 179, 185, 187, 188, 190, 202, 206, 208, 209, 210, 214, 220, 221, 224, 242, 247, 253, 254, 255, 259, 262, 264, 272, |
| CI Solvent Red | 1, 7, 23, 24, 27, 49, 52, 109, 111, 118, 119, 122, 125, 127, 130, 132, 135, 160, 179, 181, 195, |
| CI Pigment Brown: | 23, 25, |
| CI Solvent Brown | 1, 3, 20, 28, 42, 43, 44, 58, |
| CI Pigment Violet: | 15, 16, 19, 23, 29, 32, 37, 42, |
| CI Solvet Violet | 2, 8, 9, 13, 24, 36, |
| CI Pigment Blue: | 15, 15:1, 15:3, 29, 56, 60, 61, |
| CI Solvent Blue | 4, 10, 21, 35, 38, 48, 64, 67, 70,97, |
| CI Pigment Green: | 7, 36, |
| CI Solvent Green | 3, 5, 7, 28, |
| CI Pigment Black: | 10, |
| CI Solvent Black | 3, 5, 6, 7, 27, 28, 29, 34, 45, 47. |

Werden dunkle Kunststoffzusammensetzungen gewünscht, so können diese durch Beimischung von bevorzugt braunen und/oder schwarzen Farbpigmenten und/oder braunen und/oder schwarzen Farbstoffen in Gegenwart wenigstens eines plättchenförmigen Metallpigments erzielt werden. Überraschenderweise weisen derartige erfindungsgemäßen Kunststoffzusammensetzungen, die beispielsweise Sonneneinstrahlung ausgesetzt sind, nur sehr geringe Anstiege der Oberflächentemperatur im Vergleich zu Kunststoffzusammensetzungen ohne plättchenförmige Metallpigmente auf.

Normalerweise sind Kunststoffzusammensetzungen, welche mit braunen und/oder schwarzen Farbpigmenten und/oder braunen und/oder schwarzen Farbstoffen versehen sind, aufgrund deren starker Absorption solarer Strahlung hohen Wärmeanstiegen ausgesetzt.

Da die erfindungsgemäße Kunststoffzusammensetzung auch in Außenanwendungen oder Anwendungen, die dem direkten Sonnenlicht ausgesetzt sind, eingesetzt werden können soll, ist der erfindungsgemäßen wenigstens ein Lichtschutzmittel und wenigstens ein Antioxidans zuzugeben. Die Lichtschutzmittel können hierbei unterschieden werden in UV-Absorber und sterisch gehinderte Amine.

Als Lichtschutzmittel können in der erfindungsgemäßen Kunststoffzusammensetzung u.a. Verwendung finden:
UV Absorber
   2-(2'-Hydroxyphenyl)-Benzotriazole, beispielsweise
      ▪ 2-(2H-Benzotriazol-2-yl)-p-cresol (CAS Reg. No. [2440-22-4])
      ▪ 2-(2H-Benzotriazol-2-yl)-4,6-bis(1-methyl-1-phenylethyl)phenol (CAS Reg. No. [70321-86-7])
      ▪ 2-(5-Chloro-2H-benzotriazole-2-yl)-6-(1,1-dimethylethyl)-4-methylphenol(CAS Reg. No. [3896-11-5])
      ▪ 2,4-Di-tert-butyl-6-(5-chlorobenzotriazol-2-yl)phenol (CAS Reg. No. [3864-99-1])
      ▪ 2-(2H-Benzotriazol-2-yl)-4,6-ditertpentylphenol (CAS Reg. No. [25973-55-1])
      ▪ 2-(2H-Benzotriazol-2-yl)-4-(1,1,3,3-tetra-methylbutyl)phenol (CAS Reg. No. [3147-75-9])
      ▪ 2,2'-Methylenbis-(6-(2H-benzotriazol-2-yl)-4,1,3,3-tetramethylbutyl)phenol (CAS Reg. No. [103597-45-1])
      ▪ 2-(2H-Benzotriazol-2-yl)-6-dodecyl-4-methylphenol, verzweigt und linear (CAS Reg. No. [23328-53-2 / 125304-04-3 / 104487-30-1])
      ▪ 2-(2'-Hydroxy-5'-methylphenyl)benzotriazol, 2-(3',5'-Di-tert-butyl-2'-hydroxyphenyl)benzotriazol, 2-(5'-tert-Butyl-2'-hydroxyphenyl)benzotriazol, 2-(2'-Hydroxy-5'-(1,1,3,3-tetramethylbutyl)phenyl)benzotriazol, 2-(3',5'-Di-tert-butyl-2'-hydroxyphenyl)-5-chlorbenzotriazol, 2-(3'-tert-Butyl-2'-hydroxy-5'-methylphenyl)-5-chlorbenzotriazol, 2-(3'-sec-Butyl-5'-tert-butyl-2'-hydroxyphenyl)benzotriazol, 2-(2'-Hydroxy-4'-octyloxyphenyl)benzotriazol, 2-(3',5'-Di-tert-amyl-2'-hydroxyphenyl)benzotriazol, 2-(3',5'-Bis-(α,α-dimethylbenzyl)-2'-hydroxyphenyl)benzotriazol, 2-(3'-tert-Butyl-2'-hydroxy-5'-(2-octyloxycarbonylethyl)phenyl)-5-chlorbenzotriazol, 2-(3'-tert-Butyl-5'-[2-(2-ethylhexyloxy)carbonylethyl]-2'-hydroxyphenyl)-5-chlorbenzotriazol, 2-(3'-tert-Butyl-2'-hydroxy-5'-(2-methoxycarbonylethyl)phenyl)-5-chlorbenzotriazol, 2-(3'-tert-Butyl-2'-hydroxy-5'-(2-methoxycarbonylethyl)phenyl)benzotriazol, 2-(3'-tert-Butyl-2'-hydroxy-5'-(2-octyloxycarbonylethyl)phenyl)benzotriazol, 2-(3'-tert-Butyl-5'-[2-(2-ethylhexyloxy)carbonylethyl]-2'-hydroxyphenyl)benzotriazol, 2-(3'-Dodecyl-2'-hydroxy-5'-methylphenyl)benzotriazol, 2-(3'-tert-Butyl-2'-hydroxy-5'-(2-isooctyloxycarbonylethyl)phenylbenzotriazol, 2,2'-Methylen-bis[4-(1,1,3,3-tetramethylbutyl)-6-benzotriazol-2-yl-phenol]; Veresterungsprodukt von 2-[3'-tert-Butyl-5'-(2-methoxycarbonylethyl)-2'-hydroxyphenyl]-2H-benzotriazol mit Polyethylenglycol 300; 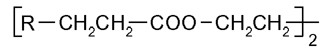 wobei R = 3'-tert-Butyl-4'-hydroxy-5'-2H-benzotriazol-2-yl-phenyl; 2-[2'-Hydroxy-3'-(α,α-dimethylbenzyl)-5'-(1,1,3,3-tetramethylbutyl)phenyl]benzotriazol; 2-[2'-Hydroxy-3'-(1,1,3,3-tetramethylbutyl)-5'-(α,α-dimethylbenzyl)phenyl]benzotriazol.
   2-Hydroxybenzophenone, beispielsweise
      ▪ 2-Hydroxy-4-(n-octyloxy)benzophenon (CAS Reg. No. [1843-05-6])
      ▪ 4-Hydroxy-, 4-Methoxy-, 4-Octyloxy-, 4-Decyloxy-, 4-Dodecyloxy-, 4-Benzyloxy-, 4,2',4'-Trihydroxy- oder 2'-Hydroxy-4,4'-dimethoxy-Derivative.
      ▪ Ester von unsubstituierten oder substitutierten Benzoesäuren, z.B. 4-tert-Butylphenylsalicylat, Phenylsalicylat, Octylphenylsalicylat, Dibenzoylresorcin, Bis(4-tert-butylbenzoyl)resorcin, Benzoylresorcin, 2,4-Di-tert-butylphenyl-3,5-di-tert-butyl-4-hydroxybenzoat, Hexadecyl-3,5-di-tert-butyl-4-hydroxybenzoat, Octadecyl-3,5-di-tert-butyl-4-hydroxybenzoat, 2-Methyl-4,6-di-tert-butylphenyl-3,5-di-tert-butyl-4-hydroxybenzoat.
Acrylate, z.B.
   ▪ α-Cyano-β,β-diphenylacrylsäureethylester oder-isooctylester, α-Methoxycarbonylzimtsäuremethylester, α-Cyano-β-methyl-p-methoxyzimtsäuremethylester oder -butylester, α-Methoxycarbonyl-p-methoxyzimtsäuremethylester, N-(β-Methoxycarbonyl-β-cyanovinyl)-2-methyl-indolin.
Oxalsäurediamide, beispielsweise
   ▪ N-(2-Ethoxyphenyl)-N'-(2-ethylphenyl)ethandiamid (CAS Reg. No. [23949-66-8])
   ▪ 4,4'-Dioctyloxyoxanilid, 2,2'-Diethoxyoxanilid, 2,2'-Dioctyloxy-5,5'-di-tert-butoxanilid, 2,2'-Didodecyloxy-5,5'-di-tert-butoxanilide, 2-Ethoxy-2'-ethyloxanilid, N,N'-Bis(3-Dimethylaminopropyl)oxamid, 2-Ethoxy-5-tert-butyl-2'-ethoxanilid und Mischungen davon mit 2-Ethoxy-2'-ethyl-5,4'-di-tert-butoxanilid, Mischungen von o- und p-Methoxy- und auch von o- and p-Ethoxy-di-substituierten Oxaniliden.
   2-(2-Hydroxyphenyl)-1,3,5-triazine, beispielsweise
   ▪ 2-(4,6-Diphenyl-1,3,5-triazin-2-yl)-5-[(hexyl)oxy]-phenol (CAS Reg. No. [174315- 50-2]), 3-(Diaryl)[1,3,5]triazin-2-yl)-5-(alkoxy substituiertes)-phenol, 2,4-Bis(2,4-dimethylphenyl)-6-(2-hydroxy-4-iso-octyloxyphenyl)-s-triazin (CAS Reg. No. [137759-38-7])
   ▪ 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxypropyloxy)phenyl]-4,6-bis(2,4-dimethylphenyl)-1,3,5-triazin, 2-[2-Hydroxy-4-(2-hydroxy-3-octyloxypropyloxy)phenyl]-4,6-bis(2,4-dimethylphenyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxypropoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxypropoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.
Formamidine, beispielsweise
   ▪ 4-[[Methylphenylamino]methylen]amino]benzoesäureethylester (CAS Reg. No. [57834-33-0])
Sterisch gehinderte Amine, beispielsweise
   ▪ Bis(2,2,6,6-tetramethyl-4-piperidyl)sebacat (CAS Reg. No. [52829-07-9])
   ▪ Bis(1,2,2,6,6-pentamethyl-4-piperidyl)sebacat + methyl 1,2,2,6,6-pentamethyl-4-piperidyl)sebacat (CAS Reg. No. [41556-26-7 und 82919-37-7])
   ▪ Bis(1-octyloxy-2,2,6,6-tetramethyl-4-piperidyl)sebacat, Reaktionsprodukte mit 1,1-Dimethylethylhydroperoxid und Oktan (CAS Reg. No. [129757-67-1])
   ▪ Poly[[6-[(1,1,3,3-tetramethylbutyl)amino]-1,3,5-triazin-2,4-diyl][(2,2,6,6-tetramethyl-4-piperidinyl)imino]-1,6-hexanediyl[(2,2,6,6-tetramethyl-4-piperidinyl)imino]]) (CAS Reg. No. [71878-19-8])
   ▪ N,N'-Bis(2,2,6,6-tetramethyl-4-piperidinyl)-1,6-hexandiamin, Polymer mit 2,4,6-Trichloro-1,3,5-triazin, Reaktionsprodukt mit N-Butyl-1-butanamin und N-Butyl-2,2,6,6-tetramethyl-4-piperidinamin (CAS Reg. No. [192268-64-7])
   ▪ N,N"'-[1,2-Ethan-diyl-bis[[[4,6-bis-[butyl (1,2,2,6,6-pentamethyl-4-piperidinyl)amino]-1,3,5-triazine-2-yl] imino]-3,1-propanediyl]]bis[N',N"-dibutyl-N',N"-bis(1,2,2,6,6-pentamethyl-4-piperidinyl)-1,3,5-triazine-2,4,6-triamin (CAS Reg. No. [106990-43-6])
   ▪ N,N'-Bis(2,2,6,6-tetramethyl-4-piperidinyl)-1,6-hexandiamin, Polymer mit 2,4,6-Trichloro-1,3,5-triazin, Reaktionprodukte mit 3-Bromo-1-propen, N-Butyl-1-butanamin und N-Butyl-2,2,6,6-tetramethyl-4-piperidinamin, oxidiert, hydriert (CAS Reg. No. [247243-62-6])
   ▪ Butandisäuredimethylester, Polymer mit 4-Hydroxy-2,2,6,6-tetramethyl-1-piperidinethanol (CAS Reg. No. [65447-77-0])
   ▪ Bis-(1,2,2,6,6-pentamethyl-4-piperidinyl)-[[3,5-bis(1,1-dimethylethyl)-4-hydroxyphenyl]methyl]butylmalonat (CAS Reg. No. [63843-89-0])
   ▪ Hostavin N30: Polymer von 2,2,4,4-Tetramethyl-7-oxa-3,20-diaza-dispiro [5.1.11.2]-heneicosan-21-on und Epichlorohydrin (CAS Reg. No. [202483-55-4])
   ▪ Hostavin N20: 2,2,4,4-Tetramethyl-21-oxo-7-oxa-3,20-diazadispiro[5.1.11.2]heneicosan (CAS Reg. No. [64338-16-5])
   ▪ Cyassorb UV-3529: N,N'-Bis(2,2,6,6-tetramethyl-4-piperidinyl)-1,6-hexandiamin, Polymere mit Morpholin-2,4,6-trichloro-1,3,5-triazin (CAS Reg. No. [193098-40-7])
   ▪ Uvinul 5050 H für PP: alpha-Alkene, C20-24, Polymere mit Maleinsäureanhydrid, Reaktionsprodukte mit 2,2,6,6-Tetramethyl-4-piperidinamin (CAS Reg. No. [152261-33-1])
   ▪ Uvinul 4050: 1,6-Hexamethylen-bis[N-formyl-N-(2,2,6,6-tetramethylpiperidin-4-yl)amin] (CAS Reg. No. [124172-53-8])
   ▪ Bis(2,2,6,6-tetramethylpiperid-4-yl)succinat, Bis(1,2,2,6,6-Pentamethylpiperid-4-yl)sebacat, Bis(1-Octyloxy-2,2,6,6-tetramethylpiperid-4-yl)sebacat, n-Butyl-3,5-di-tert-butyl-4-hydroxybenzylmalonsäure-bis(1,2,2,6,6-pentamethylpiperidyl)ester, Kondensationsprodukt von 1-Hydroxyethyl-2,2,6,6-tetramethyl-4-hydroxypiperidin und Bernsteinsäure, lineare oder zyklische Kondensationsprodukte von N,N'-Bis(2,2,6,6-tetramethyl-4-piperidyl)hexamethylendiamin und 4-tert-Octylamino-2,6-dichloro-1,3,5-s-triazin, Tris(2,2,6,6-tetramethyl-4-piperidyl)nitrilotriacetat, Tetrakis(2,2,6,6-tetramethyl-4-piperidyl)-1,2,3,4-butantetraoat, 1,1'-(1,2-Ethandiyl)bis(3,3,5,5-tetramethylpiperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)malonat, 3-n-Octyl-7,7,9,9-tetramethyl-1,3,8-triazaspiro[4.5]decan-2,4-dion, Bis(1-octyloxy-2,2,6,6-tetramethylpiperidyl)sebacat, Bis(1-octyloxy-2,2,6,6-tetramethylpiperidyl)succinat, lineare oder zyklische Kondensationsproduktevon N,N'-bis(2,2,6,6-Tetramethyl-4-piperidyl)hexamethylendiamin und 4-Morpholino-2,6-dichlor-1,3,5-triazin, Kondensationsprodukt von 2-Chlor-4,6-di(4-n-butylamino-2,2,6,6-tetramethylpiperidyl)-1,3,5-triazin und 1,2-bis(3-Aminopropylamino)ethan, Kondensationsprodukt von 2-Chlor-4,6-di(4-n-butylamino-1,2,2,6,6-pentamethylpiperidyl)-1,3,5-triazin und 1,2-Bis(3-aminopropylamino)ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)pyrrolidin-2,5-dion, Mischung von 4-Hexadecyloxy- und 4-Stearyloxy-2,2,6,6-tetramethylpiperidin, Kondensationsprodukt von N,N'-Bis(2,2,6,6-tetramethyl-4-piperidyl)hexamethylendiamin und 4-Cyclohexylamino-2,6-dichlor-1,3,5-triazin, Kondensationsprodukt von 1,2-Bis(3-aminopropylamino)ethan und 2,4,6-Trichlor-1,3,5-triazin und 4-Butylamino-2,2,6,6-tetramethylpiperidin (CAS Reg. No. [136504-96-6]); Kondensationsprodukt von 1,6-Diaminohexan und 2,4,6-Trichlor-1,3,5-triazin und N,N-Dibutylamin und 4-Butylamino-2,2,6,6-tetramethylpiperidin (CAS Reg. No. [192268-64-7]); N-(2,2,6,6-Tetramethyl-4-piperidyl)-n-dodecylsuccinimid, N-(1,2,2,6,6-Pentamethyl-4-piperidyl)-n-dodecylsuccinimid, 2-Undecyl-7,7,9,9-tetramethyl-1-oxa-3,8-diaza-4-oxo-spiro[4.5]decan, Reaktionsprodukt von 7,7,9,9-Tetramethyl-2-cycloundecyl-1-oxa-3,8-diaza-4-oxospiro[4.5]decan und Epichlorohydrin, 1,1-Bis(1,2,2,6,6-pentamethyl-4-piperidyloxycarbonyl)-2-(4-methoxyphenyl)ethen, N,N'-Bis-formyl-N,N'-bis(2,2,6,6-tetramethyl-4-piperidyl)hexamethylendiamin, Diester von 4-Methoxymethylenmalonsäure mit 1,2,2,6,6-Pentamethyl-4-hydroxypiperidin, Poly[methylpropyl-3-oxy-4-(2,2,6,6-tetramethyl-4-piperidyl)]siloxan, Reaktionsprodukt von Maleinsäureanhydrid-α-Olefin-Copolymer und 2,2,6,6-Tetramethyl-4-amino-piperidin oder 1,2,2,6,6-Pentamethyl-4-aminopiperidin.

Des Weiteren können auch Radikalfänger als Lichtschutzmittel in der erfindungsgemäßen Kunststoffzusammensetzung Verwendung finden, u.a. Nickelverbindungen, wie z.B. Nickelkomplexe von 2,2'-Thio-bis[4-(1,1,3,3-tetramethylbutyl)phenol], wie der 1 : 1 oder 1 : 2 Komplex, optional mit zusätzlichen Liganden, wie n-Butylamin, Triethanolamin oder N-Cyclohexyldiethanolamin, Nickeldibutyldithiocarbamat, Nickelsalze von 4-Hydroxy-3,5-di-tert-butylbenzylphosphonsäuremonoalkylestern, wie Methyl- oder Ethylester, Nickelkomplexe von Ketoximen, wie 2-Hydroxy-4-methylphenylundecylketoxim, Nickelkomplexe von 1-Phenyl-4-lauroyl-5-hydroxypyrazol, optional mit zusätzlichen Liganden.

Bevorzugt werden als UV-Absorber eingesetzt:
2-(2H-Benzotriazol-2-yl)-p-cresol (CAS Reg. No. [2440-22-4]),
2-(2H-Benzotriazol-2-yl)-4,6-bis(1-methyl-1-phenylethyl)phenol (CAS Reg. No. [70321-86-7]),
2-(5-Chlor-2H-benzotriazole-2-yl)-6-(1,1-dimethylethyl)-4-methylphenol (CAS Reg. No. [3896-11-5]),
2,4-Di-tert-butyl-6-(5-chlorobenzotriazol-2-yl)phenol (CAS Reg. No. [3864-99-1]),
2-(2H-Benzotriazol-2-yl)-4,6-ditertpentylphenol (CAS Reg. No. [25973-55-1]),
2,2'-Methylen-bis(6-(2H-benzotriazol-2-yl)-4,1,3,3-tetramethylbutyl)phenol (CAS Reg. No. [103597-45-1]),
N-(2-Ethoxyphenyl)-N'-(2-ethylphenyl)ethandiamid (CAS Reg. No. [23949-66-8]),
2-(2H-Benzotriazol-2-yl)-6-dodecyl-4-methylphenol, verzweigt und linear, (CAS Reg. No. [23328-53-2 / 125304-04-3 / 104487-30-1]),
2-(4,6-Diphenyl-1 ,3,5-triazin-2-yl)-5-[(hexyl)oxy]-phenol (CAS Reg. No. [174315- 50-2]),
3-(Diaryl)[1,3,5]triazin-2yl)-5-(alkoxy substituiertes)-phenol,
2,4-bis(2,4-Dimethylphenyl)-6-(2-hydroxy-4-iso-octyloxyphenyl)-s-triazin (CAS Reg. No. [137759-38-7]),
4-[[Methylphenylamino]methylen]amino]benzoesäureethylester (CAS Reg. No. [57834-33-0]).

Bevorzugt werden als sterisch gehinderte Amine eingesetzt:
Bis(2,2,6,6-tetramethylpiperid-4-yl)sebacat (CAS Reg. No. [52829-07-9]),
Bis(1,2,2,6,6-pentamethyl-4-piperidyl)sebacat + methyl 1,2,2,6,6-pentamethyl-4-piperidyl)sebacat (CAS Reg. No. [41556-26-7 und 82919-37-7]),
Decandisäure, Bis(2,2,6,6-tetramethyl-1-(octyloxy)-4-piperidinyl)ester,
Reaktionsprodukte mit 1,1-Dimethylethylhydroperoxid und Oktan (CAS Reg. No. [129757-67-1]),
Poly[[6-[(1,1,3,3-tetramethylbutyl)amino]-1,3,5-triazin-2,4-diyl][(2,2,6,6-tetramethyl-4-piperidinyl)imino]-1,6-hexandiyl[(2,2,6,6-tetramethyl-4-piperidinyl)imino]]) (CAS Reg. No. [71878-19-8]),
N, N'-bis(2,2,6,6-Tetramethyl-4-piperidinyl)-1,6-Hexandiamin, Polymer mit 2,4,6-Trichlor-1,3,5-triazin, Reaktionsprodukt mit N-Butyl-1-butanamin und N-Butyl-2,2,6,6-tetramethyl-4-piperidinamin (CAS Reg. No. [192268-64-7]),
N,N"'-[1,2-Ethan-diyl-bis [[[4,6-bis-[butyl(1,2,2,6,6-pentamethyl-4-piperidinyl)amino]-1,3,5-triazine-2-yl] imino]-3,1-propanediyl]]bis[N',N"-dibutyl-N',N"-bis(1,2,2,6,6-pentamethyl-4-piperidinyl)-1,3,5-triazin-2,4,6-triamin (CAS Reg. No. [106990-43-6]),
Butandisäuredimethylester, Polymer mit 4-Hydroxy-2,2,6,6-tetramethyl-1-piperidinethanol (CAS Reg. No. [65447-77-0]),
Bis(1,2,2,6,6-pentamethyl-4-piperidinyl)-[[3,5-bis(1,1-dimethylethyl)-4-hydroxyphenyl]methyl]butylmalonat (CAS Reg. No. [63843-89-0]),
Hostavin N30 (CAS Reg. No. [202483-55-4]),
Hostavin N20:(CAS Reg. No. [64338-16-5]),
Cyassorb UV-3529:(CAS Reg. No. [193098-40-7]),
Uvinul 5050 H für PP: (CAS Reg. No. [152261-33-1]),
Uvinul 4050 (CAS Reg. No. [124172-53-8]).

Als Antioxidantien können der erfindungsgemäßen Kunststoffzusammensetzung zugegeben werden:
1.1. Alkylierte Monophenole, z.B. 2,6-Di-tert-butyl-4-methylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-tert-Butyl-4-methoxymethylphenol, Nonylphenole mit linearen oder auch verzweigten Seitenketten, z.B. 2,6-Di-nonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol und Mischungen davon.
1.2. Alkylthiomethylphenole, z.B. 2,4-Dioctylthiomethyl-6-tert-butylphenol, 2,4-Dioctylthiomethyl-6-methylphenol, 2,4-Dioctylthiomethyl-6-ethylphenol, 2,6-Di-Dodecylthiomethyl-4-nonyl phenol.
1.3. Hydroquinone und alkylierte Hydroquinone, z.B. 2,6-Di-tert-butyl-4-methoxyphenol, 2,5-Di-tert-butylhydroquinone, 2,5-Di-tert-amylhydroquinon, 2,6-Diphenyl-4-octadecyloxyphenol, 2,6-Di-tert-butylhydroquinon, 2,5-Di-tert-butyl-4-hydroxyanisol, 3,5-Di-tert-butyl-4-hydroxyanisol, 3,5-Di-tert-butyl-4-hydroxyphenyl stearat, Bis(3,5-di-tert-butyl-4-hydroxyphenyl)adipat.
1.4. Tocopherole, z.B. α-Tocopherol, β-Tocopherol, γ-Tocopherol, δ-Tocopherol und Mischungen davon (Vitamin E).
1.5. Hydroxylierte Thiodiphenylether, z.B. 2,2'-Thiobis(6-tert-butyl-4-methylphenol), 2,2'-Thiobis(4-octylphenol), 4,4'-Thiobis(6-tert-butyl-3-methylphenol), 4,4'-Thiobis(6-tert-butyl-2-methylphenol), 4,4'-Thiobis(3,6-di-sec-amylphenol), 4,4'-Bis(2,6-dimethyl-4-hydroxyphenyl)disulfid.
1.6. Alkylidenbisphenole, z.B. 2,2'-Methylen-bis(6-tert-butyl-4-methylphenol), 2,2'-Methylen-bis(6-tert-butyl-4-Ethylphenol), 2,2'-Methylen-bis[4-methyl-6-(α-Methylcyclohexyl)phenol], 2,2'-Methylen-bis(4-methyl-6-cyclohexylphenol), 2,2'-Methylen-bis(6-nonyl-4-methylphenol), 2,2'-Methylen-bis(4,6-Di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-di-tert-butylphenol), 4,4'-Methylen-bis(6-tert-butyl-2-methylphenol), 1,1-Bis(5-tert-butyl-4-hydroxy-2-methylphenyl)butane, 2,6-Bis(3-tert-butyl-5-methyl-2-hydroxybenzyl)-4-methylphenol, 1,1,3-Tris(5-tert-butyl-4-hydroxy-2-methylphenyl)butan, 1,1-Bis(5-tert-butyl-4-hydroxy-2-methylphenyl)-3-n-dodecylmercaptobutan, Ethylenglycol-bis[3,3-bis(3'-tert-butyl-4'-hydroxyphenyl)butyrat], Bis(3-tert-butyl-4-hydroxy-5-methylphenyl)dicyclopentadien, Bis[2-(3'-tert-butyl-2'-hydroxy-5'-methylbenzyl)-6-tert-butyl-4-methylphenyl]terephthalat, 1,1-Bis-(3,5-dimethyl-2-hydroxyphenyl)butan, 2,2-Bis(3,5-di-tert-butyl-4-hydroxyphenyl)propan, 2,2-Bis-(5-tert-butyl-4-hydroxy2-methylphenyl)-4-n-dodecylmercaptobutan, 1,1,5,5-Tetra(5-tert-butyl-4-hydroxy-2-methylphenyl)pentan.
1.7. O-, N- and S-Benzyl-Verbindungen, z.B. 3,5,3',5'-Tetra-tert-butyl-4,4'-dihydroxydibenzylether, Octadecyl-4-hydroxy-3,5-dimethylbenzylmercaptoacetat, Tridecyl-4-hydroxy-3,5-di-tert-butylbenzylmercaptoacetat, Tris(3,5-di-tert-butyl-4-hydroxybenzyl)amin, Bis(4-tert-butyl-3-hydroxy-2,6-dimethylbenzyl)dithioterephthalat, Bis(3,5-di-tert-utyl-4-hydroxybenzyl)sulfid, Isooctyl-3,5-di-tert-butyl-4-hydroxybenzylmercaptoacetat.
1.8. Hydroxybenzylierte Malonate, z.B. Dioctadecyl-2,2-bis(3,5-di-tert-butyl-2-hydroxybenzyl)malonat, Di-octadecyl-2-(3-tert-butyl-4-hydroxy-5-methylbenzyl)malonat, Di-dodecylmercaptoethyl-2,2-bis(3,5-di-tert-butyl-4-hydroxybenzyl)malonat, Bis[4-(1,1,3,3-tetramethylbutyl)phenyl]-2,2-bis(3,5-di-tert-butyl-4-hydroxybenzyl)malonat.
1.9. Aromatische Hydroxybenzylverbindungen, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)phenol.
1.10. Triazin-Verbindungen, z.B. 2,4-Bis(octylmercapto)-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazine, 2,4,6-Tris(3,5-di-tert-butyl-4-hydroxyphenoxy)-1,2,3-triazine, 1,3,5-Tris(3,5-di-tert-butyl-4-hydroxybenzyl)isocyanurat, 1,3,5-Tris(4-tert-butyl-3-hydroxy-2,6-dimethylbenzyl)isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)isocyanurat.
1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, die Calciumsalze der Monoethylester von 3,5-Di-tert-butyl-4-hydroxybenzylphosphonsäure.
1.12. Acylaminophenole, z.B. 4-Hydroxylauranilid, 4-Hydroxystearanilid, Octyl N-(3,5-di-tert-butyl-4-hydroxyphenyl)carbamate.
1.13. Ester von β-(3,5-Di-tert-butyl-4-hydroxyphenyl)propionsäure mit Mono- oder Polyalkoholen, z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexanediol, Trimethylolpropan, 4-Hydroxymethyl-1-phospha-2,6,7-trioxabicyclo[2.2.2]octan.
1.14. Ester von β-(5-tert-Butyl-4-hydroxy-3-methylphenyl)propionsäure mit Mono-Polyalkoholen, z.B. mit Methanol, Ethanol, n-Octanol, i-Octanol, Octadecanol, 1,6-Hexandiol, 1,9-Nonandiol, Ethylenglycol, 1,2-Propanediol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexanediol, Trimethylolpropan, 4-Hydroxymethyl-1-phospha-2,6,7-trioxabicyclo[2.2.2]octan, 3,9-Bis[2-{3-(3-tert-butyl-4-hydroxy-5-methylphenyl)propionyloxy}-1,1-dimethylethyl]-2,4,8,10-tetraoxaspiro[5.5]undecane. 1.15. Ester von β-(3,5-Dicyclohexyl-4-hydroxyphenyl)propionsäure mit Mono- oder Polyalkoholen, z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.
1.16. Ester von 3,5-Di-tert-butyl-4-hydroxyphenylessigsäure mit Mono- oder Polyalkoholen, z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol, Trimethylolpropane, 4-Hydroxymethyl-1-phospha-2,6,7-trioxabicyclo[2.2.2]octan.
1.17. Amide von β-(3,5-Di-tert-butyl-4-hydroxyphenyl)propionsäure, z.B. N,N'-Bis(3,5-di-tert-butyl-4-hydroxyphenylpropionyl)hexamethylendiamid, N,N'-Bis(3,5-di-tert-butyl-4-hydroxyphenylpropionyl)trimethylendiamid, N,N'-Bis(3,5-di-tert-butyl-4-hydroxyphenylpropionyl)hyrazid, N,N'-Bis[2-(3-[3,5-di-tert-butyl-4-hydroxyphenyl]propionyloxy)ethyl]oxamid.
1.18. Ascorbinsäure (Vitamin C)
1.19. Aminische Antioxidantien, beispielsweise N-Phenylbenzylamin, Reaktionsprodukt mit 2,4,4-Trimethylapenten (CAS Reg. No. [192268-64-7]), N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylendiamin, N-(1-Methylheptyl)-N'-phenyl-p-phenylendiamin, N-cyclohexyl-N'-phenyl-p-phenylendiamin, 4-(p-Tolylsulfamoyl)diphenylamin, N,N'-Dimethyl-N,N'-di-sec-butyl-p-phenylendiamin, Diphenylamin, N-Allyldiphenylamin, 4-Isopropoxydiphenylamine, N-Phenyl-1-naphthylamin, N-(4-tert-Octylphenyl)-1-naphthylamin, N-Phenyl-2-naphthylamin, Octyliertes Diphenylamin, z.B. p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylaminophenol, Bis(4-methoxyphenyl)amin, 2,6-Di-tert-butyl-4-dimethylaminomethylphenol, 2,4'-Diaminodiphenylmethan, 4,4'-Diaminodiphenylmethan, N,N,N',N'-Tetramethyl-4,4'-diaminodiphenylmethan, 1,2-Bis[(2-methylphenyl)amino]ethan, 1,2-Bis(phenylamino)propan, (o-Tolyl)biguanid, Bis[4-(1',3'-dimethylbutyl)phenyl]amin, tert-octyliertes N-Phenyl-1-naphthylamin, eine Mischung aus mono- und dialkylierten tert-Butyl/tert-Octyldiphenylaminen, eine Mischung aus mono- und dialkylierten Nonyldiphenylaminen, eine Mischung aus mono- und dialkylierten Dodecyldiphenylaminen, eine Mischung aus mono- und dialkylierten Isopropyl/Isohexyldiphenylaminen, eine Mischung aus mono- und dialkylierten tert-Butyldiphenylaminen, 2,3-Dihydro-3,3-dimethyl-4H-1,4-benzothiazin, Phenothiazin, eine Mischung aus mono- und dialkylierten tert-Butyl/tert-Octylphenothiazinen, eine Mischung aus mono- und dialkylierten tert-Octylphenothiazinen, N-Allylphenothiazin, N,N,N',N'-Tetraphenyl-1,4-diaminobut-2-en, N,N-Bis(2,2,6,6-tetramethylpiperid-4-yl-hexamethylendiamin, Bis(2,2,6,6-tetramethylpiperid-4-yl)sebacat, 2,2,6,6-Tetramethylpiperidin-4-on, 2,2,6,6-tetramethylpiperidin-4-ol.

Bevorzugt werden als Antioxidantien eingesetzt Pentaerthritoltetrakis(3-(3,5-di-tert-butyl-4-hydroxphenyl)propionat (CAS Reg. No. [6683-19-8]),
Octadecyl(3-(3,5-di-tert-butyl-4-hydroxphenyl)propionat (CAS Reg. No. [2082-79-3]), 2-Ethylpentyl 3-(3,5-di-tert-butyl-4-hydroxyphenyl)propanoat (CAS Reg. No. [125643-61-0]),
Ethylenbis(oxyethylen)bis-(3-(5-tert-butyl-4-hydroxy-m-tolyl)-propionat) (CAS Reg. No. [36443-68-2]),
N,N'-Hexan-1,6-diylbis(3-3,5-di-tert-butyl-4-hydroxphenylpropionamid) (CAS Reg. No. [23128-74]),
1,3,5-tris(3,5-Di-tert-butyl-4-hydroxybenzyl)-1,3,5-triazin-2,4,6(1H,3H,5H)-trion (CAS Reg. No. [27676-62-6])
N-Phenylbenzolamin, Reaktionsprodukt mit 2,4,4-Trimethylpenten (CAS Reg. No. [192268-64-7]),
Tris(2,4-di-tert-butylphenyl)phosphit (CAS Reg. No. [31570-04-4]), Tetrakis(2,4-di-tert-butylphenyl)[1,1-biphenyl]-4,4'-diylbisphosphonit (CAS Reg. No. [119345-01-6]),
Bis(2,4-di-tert-butylphenyl)pentaerythritoldiphosphit; 3,9-bis(2,4-bis(1,1-Dimethylethyl)phenoxy)-2,4,8,10-tetraoxa-3,9-diphosphaspiro(5.5)undecan (CAS Reg. No. [26741-53-7]),
Bis-2,4-di-tert-butylphenylpentaerythritoldiphoshit (CAS Reg. No. [26741-53-7]), Bis[2,4-bis(1,1-dimethylethyl)-6-methylphenyl]ethylesterphosphorsäure (CAS Reg. No. [145650-60-8]).

Als Weichmacher können der erfindungsgemäßen Kunststoffzusammensetzung generell alle Weichmacher der Stoffklassen Phthalsäureester; Phosphorsäureester; Ester der Adipin-, Azelain-, Glutar- und Sebazinsäure; Fettsäureester, epoxidierte Fettsäureester; Zitronensäureester; Ester der Essig-, Propion- und Buttersäure; Ester der Ethylbutter- und Ethylhexansäure; Glykolsäureester; Polyester; halogenierte Kohlenwasserstoffe; aliphatische und aromatische Kohlenwasserstoffe; Benzoesäureester; Trimellitsäureester; Sulfonsäureester; Sulfamide; Anilide; Alkohole; Ether; Ketone; Polyethylenglykole; Abietinsäureesterderivate zugesetzt werden. Beispiele hierfür sind Alkylsulfonsäureester (ASE), Butylbenzyphthalat (BBP), Butyloctylphthalat (BOA), Dibutylphthalat (DBP), Dibutylsebazat (DBS), Dicyclohexylphthalat (DCHP), Dicaprylphthalat (DCP), Didecylphthalat (DDP), Diethylphthalat (DEP), Diheptylphthalat (DHP), Dihexylphthalat (DHXP), Diisobutylphthalat (DIBP), Diisodecyladipat (DIDA), Diisodecylphthalat (DIDP), Diisoheptylphthalat (DIHP), Diisohexylphthalat (DIHXP), Diisononyladipat (DINA), Diisononylphthalat (DINP), Diisooctyladipat (DIOA), Diisoocthylphthalat (DIOP), Diisopentylphthalat (DIPP), Diisotridecylphthalat (DITDP), Dimethylphthalat (DMP), Din-Octylphthalat (DNOP), Dinonylphthalat (DNP), Dioctyladipat (DOA), Dioctylisophthalat (DOIP), Dioctylphthalat (DOP), Diocthylsebazat (DOS), Dioctylterephthalat (DOTP), Dioctylazelat (DOZ), Diphenylkresylphosphat (DPCF), Diphenyloctylphosphat (DPOF), Diisotridecylphthalat (DTDP), Diundecylphthalat (DUP), epoxidiertes Leinöl (EPLO), epoxidiertes Sojaöl (EPSO), Heptylnonylundecyladipat (HNUA), Heptylnonylundecylphthalat (HNUP), Hexylocthyldecyladipat (HXODA), Hexyloctyldecylphthalat (HXODP), Nonylundecyladipat (NUA), Nonylundecylphthalat (NUP), Octyldecyladipat (ODA), Octyldecylphthalat (ODP), n-Octyldecyltrimellitat (ODTM), Trichlorethylphophat (TCEF), Trikresylphosphat (TCP), Triisooctyltrimellitat (TIOTM), Trioctylphosphat (TOP), Tetraoctylpyromellitat (TOPM), Trioctyltrimellitat (TOTM), Triphenylphosphat (TPF), Trixylylenphosphat (TXF), Misch-Alkohol-Ester, Arylalkyl-mischphosphate, Acetyl-tributylcitrat, Polyesther aus (Propan-, Butan-, Pentan- und Hexan-)Diolen mit Dicarbonsäuren (Phthalsäure, Sebazinsäure, Adipinsäure). Bevorzugt werden Weichmacher in einer Menge aus einem Bereich von 5 bis 50 Gew.-%, bezogen auf das Gesamtgewicht der Kunststoffzusammensetzung, in Kombination mit einer Kunststoffkomponente aus PVC eingesetzt.

Weiterhin können der erfindungsgemäßen Kunststoffzusammensetzung Flammschutzmittel zugesetzt werden. Generell können alle Flammschutzmittel der Stoffklassen organische Brom- und Chlorverbindungen; anorganische und organische Phosphorverbindungen; halogenierte organische Phosphate; chlorierte Paraffine, chlorierte Cycloaliphaten; anorganische Flammschutzmittel; antimonbasierte Flammschutzmittel; Phosphoniumverbindungen; Phosphor-Stickstoffverbindungen; chlorierte Phthalsäurederivate zugesetzt werden. Beispiele hierfür sind Aluminiumhydroxid, Aluminiumoxalat, Ammoniumpolyphosphat, Antimonoxid, Borsäure, Natriumtetraflourborat, Zinkborat, ZnS, ZnCl₂, Magnesiumhydroxid, Melamin, Melamincyanurat, Resorcin-bis(diphenylphosphat), Dibromstyrol, Decabromdiphenylether, Octabromdiphenylether, Hexabromdiphenylether, Pentabromdiphenylether, Hexabromdiphenoxyethan, Tetrabromphthalsäureanhydrid, Tetrabromphthalsäurediole, Tetrabrompolyether, Ethylen-bis-tetrabromphthalimid, Tetrabrombisphenol A (TBBA), TBBA-bis(2,3-dibrompropylether), TBBA-bis(2-hydroxyethylether), TBBA-bis(allylether), TBBA-bis(2-ethyletheracrylat), TBBA-Carbonat-oligomer, bromierte Epoxidharze auf Basis TBBA, Poly(dibromphenylenether), Poly(pentabrombenzylacrylat), Poly(tribromstyrol), Hexabromcyclododecan, Ethylen-bis(dibromnorbornan-di-carboximid), Dibromethyldibromcyclohexan, Dibromneopentylglykol, Tribromneopentylalkohol oder Tri(Tribromphenyl)cyanurat. Bevorzugt werden die Flammschutzmittel in einer Menge aus einem Bereich von 0 bis 60 Gew.-%, weiter bevorzugt aus einem Bereich von 5 bis 50 Gew.-%, besonders bevorzugt aus einem Bereich von 10 bis 40 Gew.-% und ganz besonders bevorzugt aus einem Bereich von 20 bis 30 Gew.-%, jeweils bezogen auf das Gesamtgewicht der Kunststoffzusammensetzung, eingesetzt.

Kunststoffe zeichnen sich durch ihre geringe Dichte aus. Durch Zusatz erfindungsgemäß einzusetzenden Metallpigmente wird die Dichte der erfindungsgemäßen Kunststoffzusammensetzung nur unwesentlich, vorzugsweise weniger als 5%, erhöht. Eine Kunststoffzusammensetzung hat üblicherweise eine Dichte von 0,9 bis 1,1 g/cm³ (Polyolefine < 1,0 g/cm³).

Die erfindungsgemäße Kunststoffzusammensetzung kann in unterschiedlichen Applikationen, wie z.B. als Folie oder Film, Tape, Platte oder auch als Profil vorliegen. Da die erfindungsgemäße Kunststoffzusammensetzung auch in Außenanwendungen bzw. Anwendungen, die dem direkten Sonnenlicht ausgesetzt sind, zum Einsatz kommen soll, ist es zweckmäßig zum Schutz der Kunststoffkomponente wenigstens ein Lichtschutzmittel zuzusetzen.

Bei einer bevorzugten Ausführungsform umfasst die erfindungsgemäße Kunststoffzusammensetzung wenigstens ein Metallpigment in einer Menge aus einem Bereich von 0,01 bis 25 Gew.-%, wenigstens ein Lichtschutzmittel in einer Menge aus einem Bereich von 0,01 bis 10 Gew.-% und wenigstens ein Antioxidans in einer Menge aus einem Bereich von 0,001 bis 0,5 Gew.-%, jeweils bezogen auf den Gewichtsanteil der Kunststoffzusammensetzung. Besonders bevorzugt umfasst die erfindungsgemäße Kunststoffzusammensetzung wenigstens ein Metallpigment in einer Menge aus einem Bereich von 0,1 bis 15 Gew.-%, weiter bevorzugt aus einem Bereich von 0,5 bis 15 Gew.-%, wenigstens ein Lichtschutzmittel in einer Menge aus einem Bereich von 0,05 bis 10 Gew.-%, weiter bevorzugt aus einem Bereich von 0,7 bis 7 Gew.-%, und wenigstens ein Antioxidans in einer Menge aus einem Bereich von 0,008 bis 0,4 Gew.-%, weiter bevorzugt aus einem Bereich von 0,01 bis 0,3 Gew.-%, jeweils bezogen auf den Gewichtsanteil der Kunststoffzusammensetzung.
Bei einer besonders bevorzugten Ausführungsform wird die eingesetzte Menge an wenigstens einem Metallpigment und wenigstens einem Lichtschutzmittel an die jeweilige Dicke der Applikation angepasst. Liegt die erfindungsgemäße Kunststoffzusammensetzung als Folie oder Film in einer Dicke aus einem Bereich von 10 bis 100 µm vor, umfasst die Kunststoffzusammensetzung wenigstens ein Metallpigment in einer Menge aus einem Bereich von 0,5 bis 15 Gew.-%, wenigstens ein Lichtschutzmittel in einer Menge aus einem Bereich von 0,01 bis 10 Gew.-% sowie wenigstens ein Antioxidans in einer Menge aus einem Bereich von 0,01 bis 0,2 Gew.-%, jeweils bezogen auf den Gewichtsanteil der Folie oder des Films. Bei einer bevorzugten Ausführungsform umfasst die Folie oder der Film in einer Dicke aus einem Bereich von 10 bis 100 µm wenigstens ein Metallpigment in einer Menge aus einem Bereich von 0,7 bis 13 Gew.-%, weiter bevorzugt aus einem Bereich von 1,1 bis 13 Gew.-%, besonders bevorzugt aus einem Bereich von 1,3 bis 12 Gew.-%, ganz besonders bevorzugt aus einem Bereich von 1,6 bis 11 Gew.-%, wenigstens ein Antioxidans in einer Menge aus einem Bereich von 0,01 bis 0,2 Gew.-%, jeweils bezogen auf den Gewichtsanteil der Folie oder des Films, sowie wenigstens ein Lichtschutzmittel, wobei das Lichtschutzmittel sterisch gehinderte Amine (HALS) in einer Menge aus einem Bereich von 1,1 bis 7,3 Gew.-%, weiter bevorzugt aus einem Bereich von 1,4 bis 6,9 Gew.-%, besonders bevorzugt aus einem Bereich von 1,6 bis 6,4 Gew.-%, ganz besonders bevorzugt aus einem Bereich von 2,1 bis 5,2 Gew.-% und UV-Absorber in einer Menge aus einem Bereich von 0,005 bis 1,9 Gew.-%, weiter bevorzugt aus einem Bereich von 0,007 bis 1,7 Gew.-%, besonders bevorzugt aus einem Bereich von 0,008 bis 1,4 Gew.-% und ganz besonders bevorzugt aus einem Bereich von 0,01 bis 1,1 Gew.-%, jeweils bezogen auf den Gewichtsanteil der Folie oder des Films, umfasst.

Liegt die erfindungsgemäße Kunststoffzusammensetzung als Folie in einer Dicke aus einem Bereich von 0,1 bis 0,5 mm vor, umfasst die Kunststoffzusammensetzung wenigstens ein Metallpigment in einer Menge aus einem Bereich von 0,5 bis 10 Gew.-%, wenigstens ein Lichtschutzmittel in einer Menge aus einem Bereich von 0,01 bis 7 Gew.-%, sowie wenigstens ein Antioxidans in einer Menge aus einem Bereich von 0,01 bis 0,2 Gew.-%, jeweils bezogen auf den Gewichtsanteil der Folie. Bei einer bevorzugten Ausführungsform umfasst die Folie in einer Dicke aus einem Bereich von 0,1 bis 0,5 mm wenigstens ein Metallpigment in einer Menge aus einem Bereich von 0,5 bis 8 Gew.-%, bevorzugt aus einem Bereich von 0,7 bis 6,7 Gew.-%, weiter bevorzugt aus einem Bereich von 0,8 bis 5,9 Gew.-%, ganz besonders bevorzugt aus einem Bereich von 0,9 bis 5,1 Gew.-%, wenigstens ein Antioxidans in einer Menge aus einem Bereich von 0,01 bis 0,2 Gew.-%, jeweils bezogen auf den Gewichtsanteil der Folie, sowie wenigstens ein Lichtschutzschutzmittel, wobei das Lichtschutzmittel sterisch gehinderte Amine (HALS) in einer Menge aus einem Bereich von 0,01 bis 4 Gew.-%, bevorzugt aus einem Bereich von 0,05 bis 3 Gew.-%, weiter bevorzugt aus einem Bereich von 0,07 bis 2,7 Gew.-%, besonders bevorzugt aus einem Bereich von 0,09 bis 2,4 Gew.-%, ganz besonders bevorzugt aus einem Bereich von 0,1 bis 2,2 Gew.-% und UV-Absorber in einer Menge aus einem Bereich von 0 bis 2 Gew.-%, bevorzugt aus einem Bereich von 0 bis 1,7 Gew.-%, weiter bevorzugt aus einem Bereich von 0 bis 1,3 Gew.-% und ganz besonders aus einem Bereich von 0 bis 1,1 Gew.-%, jeweils bezogen auf den Gewichtsanteil der Folie, umfasst.

Liegt die erfindungsgemäße Kunststoffzusammensetzung als Platte mit einer Dicke aus einem Bereich von 0,5 bis 2 mm vor, umfasst die Kunststoffzusammensetzung wenigstens ein Metallpigment in einer Menge aus einem Bereich von 0,01 bis 5 Gew.-%, wenigstens ein Lichtschutzmittel in einer Menge aus einem Bereich von 0,02 bis 4 Gew.-% und wenigstens ein Antioxidans in einer Menge aus einem Bereich von 0,01 bis 0,2 Gew.-%, jeweils bezogen auf den Gewichtsanteil der Platte. Bei einer bevorzugten Ausführungsform umfasst die Platte in einer Dicke aus einem Bereich von 0,5 bis 2 mm wenigstens ein Metallpigment in einer Menge aus einem Bereich von 0,01 bis 4,3 Gew.-%, bevorzugt aus einem Bereich von 0,04 bis 3,9 Gew.-%, weiter bevorzugt aus einem Bereich von 0,07 bis 3,4 Gew.-%, besonders bevorzugt aus einem Bereich von 0,09 bis 3,2 Gew.-%, ganz besonders bevorzugt aus einem Bereich von 0,1 bis 3 Gew.-%, wenigstens ein Antioxidans in einer Menge aus einem Bereich von 0,01 bis 0,2 Gew.-%, jeweils bezogen auf den Gewichtsanteil der Platte sowie wenigstens ein Lichtschutzmittel, wobei das Lichtschutzmittel sterisch gehinderte Amine in einer Menge aus einem Bereich von 0,01 bis 2,7 Gew.-%, bevorzugt aus einem Bereich von 0,02 bis 2,3 Gew.-%, weiter bevorzugt aus einem Bereich von 0,03 bis 1,9 Gew.-%, besonders bevorzugt aus einem Bereich von 0,04 bis 1,3 Gew.-%, ganz besonders bevorzugt aus einem Bereich von 0,05 bis 1,1 Gew.-% und UV-Absorber in einer Menge aus einem Bereich von 0,05 bis 3,8 Gew.-%, bevorzugt aus einem Bereich von 0,07 bis 3,1 Gew.-%, weiter bevorzugt aus einem Bereich von 0,08 bis 2,6 Gew.-%, besonders bevorzugt aus einem Bereich von0,09 bis 2,3 Gew.-% und ganz besonders bevorzugt aus einem Bereich von 0,1 bis 2,1 Gew.-%, jeweils bezogen auf den Gewichtsanteil der Platte, umfasst.

Liegt die erfindungsgemäße Kunststoffzusammensetzung als Profil in einer Dicke von > 2 mm vor, umfasst die Kunststoffzusammensetzung wenigstens ein Metallpigment in einer Menge aus einem Bereich von 0,001 bis 5 Gew.-%, wenigstens ein Lichtschutzmittel in einer Menge aus einem Bereich von 0,1 bis 7 Gew.-% und wenigstens ein Antioxidans in einer Menge aus einem Bereich von 0,01 bis 0,2 Gew.-%, jeweils bezogen auf den Gewichtsanteil des Profils. Bei einer bevorzugten Ausführungsform umfasst das Profil in einer Dicke von > 2 mm wenigstens ein Metallpigment in einer Menge aus einem Bereich von 0,001 bis 3,9 Gew.-%, bevorzugt aus einem Bereich von 0,002 bis 3,5 Gew.-%, weiter bevorzugt aus einem Bereich von 0,004 bis 3,1 Gew.-%, besonders bevorzugt aus einem Bereich von 0,008 bis 2,6 Gew.-%, ganz besonders bevorzugt aus einem Bereich von 0,01 bis 2,3 Gew.-%, wenigstens ein Antioxidans in einer Menge aus einem Bereich von 0,01 bis 0,2 Gew.-%, jeweils bezogen auf den Gewichtsanteil des Profils und wenigstens ein Lichtschutzmittel, wobei das Lichtschutzmittel sterisch gehinderte Amine (HALS) in einer Menge aus einem Bereich von 0 bis 0,9 Gew.-%, bevorzugt aus einem Bereich von 0 bis 0,8 Gew.-%, weiter bevorzugt aus einem Bereich von 0 bis 0,7 Gew.-%, besonders bevorzugt aus einem Bereich von 0 bis 0,6 Gew.-%, ganz besonders bevorzugt aus einem Bereich von 0 bis 0,5 Gew.-% und UV-Absorber in einer Menge aus einem Bereich von 0,05 bis 6,7 Gew.-%, bevorzugt aus einem Bereich von 0,1 bis 6,4 Gew.-%, weiter bevorzugt aus einem Bereich von 0,15 bis 6,1 Gew.-%, besonders bevorzugt aus einem Bereich von 0,2 bis 5,6 Gew.-% und ganz besonders bevorzugt aus einem Bereich von 0,25 bis 5,2 Gew.-%, jeweils bezogen auf den Gewichtsanteil des Profils, umfasst.

Sonnenlicht, das als Strahlung bis zur Erdoberfläche reicht, lässt sich nach der ASTM G 173-03 (2012) "Standard Air Mass 1.5 Direct Normal and Hemispherical Spectral Solar Irradiance for 37° Sun-Facing Tited Surface" im Wesentlichen in drei Teilbereiche aufteilen: 5% der auf der Oberfläche ankommenden Energie decken den UV-Spektralbereich (300 bis 400 nm) ab, nahezu 43% den visuellen Bereich (400 bis 700 nm) und 52% den NIR-Bereich (700 bis 2500 nm).

Mit einer an das Spektrometer (Gerät: Lambda 1050 der Firma Perkin-Elmer) angeschlossenen Ulbricht-Integrationskugel wurde die diffuse Reflexion über alle Raumwinkel im Bereich 280 bis 2500 nm gemessen. Unter Berücksichtigung der ASTM G 173-03 wurde die Totale Solare Reflexion (TSR) berechnet im Bereich von 300 bis 2500 nm.

Der Wert für die totale solare Reflexion (TSR-Wert) gewinnt zunehmend an Bedeutung, weil er das gesamte elektromagnetische Wellenlängenspektrum der Solarstrahlung berücksichtigt. Für die thermische Aufheizung von Oberflächen muss jedoch die gesamte Sonnenstrahlung berücksichtigt werden - bestehend aus ultra-violetter, Infrarot sowie sichtbarer Strahlung. Die Gesamtsolarreflexion (Total Solar Reflectance TSR) ist ein Maß für den Anteil der einstrahlenden terrestrischen Sonnenenergie, die von einer Oberfläche zurückgestrahlt wird. Es handelt sich dabei um den Anteil Sonnenstrahlungsenergie, der von einer Oberfläche zurückgestrahlt wird. Je höher dieser Wert ist, desto stärker wird die solare Strahlung reflektiert - umso geringer ist daher der Temperaturanstieg gegenüber der Umgebungstemperatur, der auf einer Beschichtungsoberfläche nach Sonneneinstrahlung gemessen werden kann. Je kleiner der TSR-Wert ist, desto größer ist die thermische Aufheizung der Oberfläche, je größer der TSR-Wert desto geringer ist die thermische Aufheizung. Der TSR-Wert ist demnach umgekehrt proportional zur Aufheizung.

Grundsätzlich gilt: Oberflächen von Kunststoffen, welche ein hohes Reflexionsvermögen aufweisen, bleiben bei direkter Sonneneinstrahlung wesentlich kühler. Dies wirkt der Aufheizung des Kunststoffes entgegen und führt dazu, dass sich die Oberfläche weniger erwärmt. "Cool Plastics" neigen daher weniger zur Verformung; sie zeigen eine verbesserte Wärmeformbeständigkeit. Diese Tatsache eröffnet hohes Potential für die Erzielung von "Cool Plastics", selbst bei sehr dunklen Farbtönen, welche mit dem entsprechenden Metallpigment in der erfindungsgemäßen Kunststoffzusammensetzung möglich ist. Eine hohe TSR-Effizienz - dies entspricht einer niedrigen NIR-Absorption - führt zu kühleren Kunststoffoberflächen.

Dieser Effekt ist nützlich sowohl im Outdoor-Bereich als auch für Automobilanwendungen wie Fahrzeugarmaturen und andere Kunststoffteile im Fahrzeuginnenbereich, welche in hohem Maß dem Sonnenlicht ausgesetzt sind.

Die Aufheizrate der erfindungsgemäßen Kunststoffzusammensetzung wird analog zu ASTM D 4803 -97 (Reapproved 2002) "Standard Test Method for Predicting Heat Buildup in PVC Building Products" bestimmt.

Die erfindungsgemäße Kunststoffzusammensetzung kann mit allen üblichen Verfahren zur Kunststoffverarbeitung verarbeitet werden, z.B. Spritzgießen, Blasformen (Folien, Hohlkörper), Schäumen, Kalandrieren, Gießen, Extrudieren und Coextrusion (mehr als eine Schicht).
Beim Coextrudieren kann die erfindungsgemäße Kunststoffzusammensetzung in einer oder mehreren Schichten enthalten sein. Auch können die Einzelkomponenten der erfindungsgemäßen Kunststoffzusammensetzung in mehreren Schichten verteilt sein. Beispielsweise kann die Deckschicht HALS, UV-Absorber und Antioxidans, die zweite Schicht das erfindungsgemäß einzusetzende Metallpigment und Antioxidans oder HALS, UV-Absorber, Antioxidans enthalten, wobei einzusetzendes Metallpigment auch in der Deckschicht vorhanden sein kann.

Die erfindungsgemäßen Kunststoffzusammensetzungen können in kompaktierter Form, z.B. als Pellet, vorliegen.

Die erfindungsgemäß einzusetzenden Metallpigmente oder die Pigmentmischungen können in Pulverform mit 0 Gew.-% bis 100 Gew.-%, bezogen auf das Gesamtgewicht des Pigments, an aktivem Material und/oder als z.B. Pellet, Granulat, Masterbatch, Compound mit 0 Gew.-% bis 99 Gew.-%, bezogen auf das jeweilige Gesamtgewicht, aktivem Material vorliegen. Unter aktivem Material wird nur das Pigment ohne weitere Bindemittel, Öl oder Weichmacher verstanden.
Pellets, Granulat, Masterbatch, Compounds etc. werden durch Kompaktieren einer Mischung der erfindungsgemäßen Pigmente/Pigmentmischungen mit einem so genannten Trägermaterial hergestellt.
Das Kompaktieren kann durch z.B. einen Pelletierteller, eine Tablettierpresse, eine Lochwalze, einen Sprühtrockner, einen Extruder (Einschnecken- oder Doppelschneckenextruder) durchgeführt werden.

Die verwendete Konzentration des erfindungsgemäßen Pigments/der erfindungsgemäßen Pigmentmischung im Pellet richtet sich nach den technischen Anforderungen und kann vorzugsweise zwischen 0% und 99 Gew.-% liegen, weiter bevorzugt zwischen 5% und 90 Gew.-%, jeweils bezogen auf das Gesamtgewicht der Gesamtformulierung der Pellets.
Zur Pelletierung kann eine Vielzahl von Dispergierhilfsmitteln, Wachsen, Harzen, Kunststoffen eingesetzt werden, z.B. natürliche und künstliche Harze wie Alkydharze, Carboxylmethyl- und Carboxylethylcelluloseharze, Celluloseacetat, Celluloseacetatpropionat (CAP) und Celluloseacetetbutyrat (CAB), Cumarol-Indenharze, Epoxidester, Epoxid-Melamin- und Epoxid-Phenolkondensate, Ethyl- und Methylcellulose, Ethylhydroxyethylcellulose, Hydroxyethylcellulose, Hydroxypropylmethylcellulose, Keton- und Maleinsäureharze, Kolophoniumharze, Melaminharze, Nitrocelluloseharze, Phenol- und modifizierte Phenolharze, Polyacrylamid-, Polycarbonat-, Polyamid-, Polyester-, Polyether-, Polyethan- oder Vinylharze oder Mischungen davon. Unter diesen polymeren Harzen sind insbesondere die folgenden bevorzugt: acrylatische Copolymere und Acrylesterharze, Polyacrylonitril- und Acrylonitrilcopolymerharze, Copolymere aus Butadien und Vinylidenchlorid, Butadien/Styrol-Copolymere, Methacrylat- und Methylmethacrylatcopolymere, Polybuten-, Polyisobutylen-, Polyvinylacetat-, Polyvinylalkohol-, Polyvinylchlorid-, Polyvinylether-, Polyvinylpyrrolidon- und Polystyrolharze. Weitere Copolymere beinhalten Styrol/Maleinsäureanhydrid- und Styrol/Schellackharze, Vinylchlorid/Vinylacetat-, Vinylchlorid/Vinylether- und Vinylchlorid/Vinylidenchloridharze. Ferner können auch natürlich vorkommende Harze wie Gummi Arabicum, Guttapercha, Casein und Gelatine verwendet werden. Bevorzugt sind Aldehydharze, wie z.B. aus der Laropalserie der BASF SE, Ludwigshafen, Deutschland. Weiterhin kommen Wachse als Bindematerialien in Frage. Hier sind als Beispiele natürliche Wachse wie Bienen-, Candellila-, Carnauba-, Montan- sowie Paraffinwachse zu nennen. Ebenso kommen synthetische Wachse wie beispielsweise Polyethylenwachse in Betracht. Die vorgenannten Präparationen lassen sich sehr gut in Kunststoffe einarbeiten, ohne dass es zu unerwünschten Agglomerationen von Metallpigmenten, wie beispielsweise Eiseneffektpigmenten, kommt.

Alle in der erfindungsgemäßen Kunststoffzusammensetzung einzusetzenden Bestandteile sowie die Kunststoffkomponente und optional weitere Komponenten werden so eingesetzt, dass sie sich zu 100 Gew.-%, bezogen auf den Gewichtsanteil der Kunststoffzusammensetzung, addieren.

In der erfindungsgemäßen Kunststoffzusammensetzung werden negative Einflüsse von Metallpigmenten auf die jeweilige Kunststoffkomponente, wie z.B. ein schnellerer Abbau der Kunststoffkomponente in Gegenwart von Metallpigmenten, durch die erfindungsgemäß bevorzugte Anwesenheit sowohl eines Lichtschutzmittels als auch eines Antioxidans relativiert. Dies trifft vorzugsweise sowohl für unbeschichtete als auch überraschenderweise für beschichtete Metallpigmente zu. Verantwortlich sind für den Abbau der Kunststoffkomponenten Metallionen, die auch durch eine Beschichtung des Metallpigments hindurch wandern und die Kunststoffkomponente schädigen können. Die Erfinder sind der Auffassung, dass vorzugsweise entweder das Lichtschutzmittel oder das Antioxidans vorzugsweise derart ausgewählt werden sollte, dass ein Metallkomplex mit freien Metallionen ausgebildet werden kann.

Bei einer weiteren Ausführungsform betrifft die vorliegende Erfindung eine Kunststoffzusammensetzung, welche wenigstens ein plättchenförmiges Metallpigment, vorzugsweise ein mit Siliziumoxiden, Siliziumhydroxiden und/oder Siliziumoxidhydraten beschichtetes Eisenpigment, in einer Menge aus einem Bereich von 0,01 bis 10,1 Gew.-%, wenigstens ein Lichtschutzmittel sowie wenigstens ein Antioxidans umfasst, wobei die Kunststoffkomponente aus Polypropylen (PP), PP-Copolymeren, Polyethylen (PE), PE-Copolymeren, HDPE, LDPE, LLDPE oder anderen Polyolefinen besteht, wobei das wenigstens eine Lichtschutzmittel ausgewählt ist aus der Gruppe bestehend aus Poly[[6-[(1,1,3,3-tetramethylbutyl)amino]-1,3,5-triazin-2,4-diyl][(2,2,6,6-tetramethyl-4-piperidinyl)imino]-1,6-hexanediyl[(2,2,6,6-tetramethyl-4-piperidinyl)imino]]) (CAS Reg. No. [71878-19-8]), 1,6-Hexandiamin, N, N'-Bis(2,2,6,6-tetramethyl-4-piperidinyl)-polymer mit 2,4,6-Trichloro-1,3,5-triazin, Reaktionsprodukte mit N-Butyl-1-butanamin und N-Butyl-2,2,6,6-tetramethyl-4-piperidinamin (CAS Reg. No. [192268-64-7]), Butandisäuredimethylester, Polymer mit 4-Hydroxy-2,2,6,6-tetramethyl-1-piperidinethanol (CAS Reg. No. [65447-77-0]), Bis(2,2,6,6-Tetramethylpiperid-4-yl)sebacat (CAS Reg. No. [52829-07-9]), Hostavin N30: Polymer von 2,2,4,4-Tetramethyl-7-oxa-3,20-diaza-dispiro[5.1.11.2]-heneicosan-21-on und Epichlorohydrin, (CAS Reg. No. [202483-55-4]), alpha-Alkene, C20-24, Polymere mit Maleinsäureanhydrid, Reaktionsprodukte mit 2,2,6,6-Tetramethyl-4-piperidinamin (CAS Reg. No. [152261-33-1]), 2-(5-Chloro-2H-benzotriazol-2-yl)-6-(1,1-dimethylethyl)-4-methylphenol (CAS Reg. No. [3896-11-5]), und/oder Mischungen davon und wobei das wenigstens eine Antioxidans ausgewählt ist aus der Gruppe bestehend aus Pentaerthritoltetrakis(3-(3,5-di-tert-butyl-4-hydroxphenyl)propionat (CAS Reg. No. [6683-19-8]), Octadecyl-3-(3,5-di-tert-butyl-4-hydroxyphenyl)propionat (CAS Reg. No. [2082-79-3]), Tris(2,4-di-tert-butylphenyl)phosphit (CAS Reg. No. [31570-04-4]), Tetrakis(2,4-di-tert-butylphenyl)[1,1-biphenyl]-4,4'-diylbisphosphonit (CAS Reg. No. [119345-01-6]), Bis(2,4-di-tert-butylphenyl)pentaerythritoldiphosphit, 3,9-Bis(2,4-bis(1,1-dimethylethyl)phenoxy)-2,4,8,10-tetraoxa-3,9-diphosphaspiro(5.5)undecan (CAS Reg. No. [26741-53-7]), und/oder Mischungen davon und wobei das wenigstens eine Lichtschutzmittel und das wenigstens eine Antioxidans in einem Gewichtsverhältnis von 1:1 bis 1:11 vorliegen.

Bei einer weiteren Ausführungsform betrifft die vorliegende Erfindung eine Kunststoffzusammensetzung, welche wenigstens ein plättchenförmiges Metallpigment, vorzugsweise ein mit Siliziumoxiden, Siliziumhydroxiden und/oder Siliziumoxidhydraten beschichtetes Eisenpigment, in einer Menge aus einem Bereich von 0,25 bis 6,9 Gew.-%, wenigstens ein Lichtschutzmittel sowie wenigstens ein Antioxidans umfasst, wobei die Kunststoffkomponente aus Polypropylen (PP), PP-Copolymeren, Polyethylen (PE), PE-Copolymeren, HDPE, LDPE, LLDPE oder anderen Polyolefinen besteht, wobei das wenigstens eine Lichtschutzmittel ausgewählt ist aus der Gruppe bestehend aus Poly[[6-[(1,1,3,3-tetramethylbutyl)amino]-1,3,5-triazin-2,4-diyl][(2,2,6,6-tetramethyl-4-piperidinyl)imino]-1,6-hexanediyl[(2,2,6,6-tetramethyl-4-piperidinyl)imino]]) (CAS Reg. No. [71878-19-8]), 1,6-Hexandiamin, N, N'-Bis(2,2,6,6-tetramethyl-4-piperidinyl)-Polymer mit 2,4,6-Trichlor-1,3,5-triazin, Reaktionsprodukte mit N-Butyl-1-butanamin und N-Butyl-2,2,6,6-tetramethyl-4-piperidinamin (CAS Reg. No. [192268-64-7]), Butandisäuredimethylester, Polymer mit 4-Hydroxy-2,2,6,6-tetramethyl-1-piperidinethanol (CAS Reg. No. [65447-77-0]), Bis(2,2,6,6-Tetramethylpiperid-4-yl)sebacat (CAS Reg. No. [52829-07-9]), Hostavin N30 (CAS Reg. No. [202483-55-4]), alpha-Alkene, C20-24, Polymere mit Maleinsäureanhydrid, Reaktionsprodukte mit 2,2,6,6-Tetramethyl-4-piperidinamin (CAS Reg. No. [152261-33-1]), 2-(5-Chloro-2H-benzotriazol-2-yl)-6-(1,1-dimethylethyl)-4-methylphenol (CAS Reg. No. [3896-11-5]), und/oder Mischungen davon und wobei das wenigstens eine Antioxidans ausgewählt ist aus der Gruppe bestehend aus Pentaerthritoltetrakis(3-(3,5-di-tert-butyl-4-hydroxphenyl)propionat (CAS Reg. No. [6683-19-8]), Octadecyl (3-(3,5-di-tert-butyl-4-hydroxphenyl)propionat (CAS Reg. No. [2082-79-3]), Tris(2,4-di-tert-butylphenyl)phosphit (CAS Reg. No. [31570-04-4]), Tetrakis(2,4-di-tert-butylphenyl)[1,1-biphenyl]-4,4'-diylbisphosphonit (CAS Reg. No. [119345-01-6]), Bis(2,4-di-tert-butylphenyl)pentaerythritoldiphosphit, 3,9-Bis(2,4-bis(1,1-dimethylethyl)phenoxy)-2,4,8,10-tetraoxa-3,9-diphosphaspiro(5.5)undecan (CAS Reg. No. [26741-53-7]), und/oder Mischungen davon und wobei das wenigstens eine Metallpigment und das wenigstens eine Lichtschutzmittel in einem Gewichtsverhältnis von 1:11 bis 11:1, vorzugsweise in einem Gewichtsverhältnis von 5:1 bis 1:5, vorliegen.

Bei einer weiteren Ausführungsform betrifft die vorliegende Erfindung eine Kunststoffzusammensetzung, welche wenigstens ein plättchenförmiges Metallpigment, vorzugsweise ein mit Siliziumoxiden, Siliziumhydroxiden und/oder Siliziumoxidhydraten beschichtetes Eisenpigment, in einer Menge aus einem Bereich von 0,1 bis 4,6 Gew.-%, wenigstens ein Lichtschutzmittel sowie wenigstens ein Antioxidans umfasst, wobei die Kunststoffkomponente aus Polypropylen (PP), PP-Copolymeren, Polyethylen (PE), PE-Copolymeren, HDPE, LDPE, LLDPE oder anderen Polyolefinen besteht, wobei das wenigstens eine Lichtschutzmittel ausgewählt ist aus der Gruppe bestehend aus Poly[[6-[(1,1,3,3-tetramethylbutyl)amino]-1,3,5-triazin-2,4-diyl][(2,2,6,6-tetramethyl-4-piperidinyl)imino]-1,6-hexanediyl[(2,2,6,6-tetramethyl-4-piperidinyl)imino]]) (CAS Reg. No. [71878-19-8]), 1,6-Hexandiamin, N, N'-Bis(2,2,6,6-tetramethyl-4-piperidinyl)-Polymer mit 2,4,6-Trichloro-1,3,5-triazin, Reaktionsprodukte mit N-Butyl-1-butanamin und N-Butyl-2,2,6,6-tetramethyl-4-piperidinamin (CAS Reg. No. [192268-64-7]), Butandisäuredimethylester, Polymer mit 4-Hydroxy-2,2,6,6-tetramethyl-1-piperidinethanol (CAS Reg. No. [65447-77-0]), Bis(2,2,6,6-Tetramethylpiperid-4-yl)sebacat (CAS Reg. No. [52829-07-9]), Hostavin N30 (CAS Reg. No. [202483-55-4]), alpha-Alkene, C20-24, Polymere mit Maleinsäureanhydrid, Reaktionsprodukte mit 2,2,6,6-Tetramethyl-4-piperidinamin (CAS Reg. No. [152261-33-1]), 2-(5-Chloro-2H-benzotriazol-2-yl)-6-(1,1-dimethylethyl)-4-methyl-phenol (CAS Reg. No. [3896-11-5]), und/oder Mischungen davon und wobei das wenigstens eine Antioxidans ausgewählt ist aus der Gruppe bestehend aus Pentaerthritoltetrakis(3-(3,5-di-tert-butyl-4-hydroxphenyl)propionat (CAS Reg. No. [6683-19-8]), Octadecyl(3-(3,5-di-tert-butyl-4-hydroxphenyl)propionat (CAS Reg. No. [2082-79-3]), Tris(2,4-di-tert-butylphenyl)phosphit (CAS Reg. No. [31570-04-4]), Tetrakis(2,4-di-tert-butylphenyl)[1,1-biphenyl]-4,4'-diylbisphosphonit (CAS Reg. No. [119345-01-6]), Bis(2,4-di-tert-butylphenyl)pentaerythritoldiphosphit, 3,9-Bis(2,4-bis(1,1-dimethylethyl)phenoxy)-2,4,8,10-tetraoxa-3,9-diphosphaspiro(5.5)undecan (CAS Reg. No. [26741-53-7]), und/oder Mischungen davon und wobei das wenigstens eine Lichtschutzmittel und das wenigstens eine Antioxidans in einem Gewichtsverhältnis von 11:1 bis 1:11 vorliegen.

Bei einer weiteren Ausführungsform betrifft die vorliegende Erfindung eine Kunststoffzusammensetzung, welche wenigstens ein plättchenförmiges Metallpigment, vorzugsweise ein mit Siliziumoxiden, Siliziumhydroxiden und/oder Siliziumoxidhydraten beschichtetes Eisenpigment, in einer Menge aus einem Bereich von 0,01 bis 5,1 Gew.-%, wenigstens ein Lichtschutzmittel sowie wenigstens ein Antioxidans umfasst, wobei die Kunststoffkomponente aus Polystyrol (PS), SAN, HIPS, Acrylnitril/Butadien/Styrol (ABS), ASA, anderen Styrolcopolymeren, Polycarbonat, Polymerblends wie PC/ABS oder PC/ASA, Polyoxymethylen (POM), Polyamiden (PA6, PA6.6, PA11, PA12, etc.), Polyester wie PET, PBT, Polyurethanen, thermoplastischen Polyurethanen (TPU), Polymethylmethacrylat (PMMA) sowie anderen Acrylatpolymeren, Acrylatcopolymeren oder anderen technische Thermoplaste besteht, wobei das wenigstens eine Lichtschutzmittel ausgewählt ist aus der Gruppe bestehend aus Poly[[6-[(1,1,3,3-tetramethylbutyl)amino]-1,3,5-triazin-2,4-diyl][(2,2,6,6-tetramethyl-4-piperidinyl)imino]-1,6-hexandiyl[(2,2,6,6-tetramethyl-4-piperidinyl)imino]]) (CAS Reg. No. [71878-19-8]), Bis(2,2,6,6-Tetramethylpiperid-4-yl)sebacat (CAS Reg. No. [52829-07-9]), 1,3,5-Triazin-2,4,6-triamin, N,N"'-1,2-Ethandiylbis(N-(3-((4,6-bis(butyl(1,2,2,6,6-pentamethyl-4-piperidinyl)amino)-1,3,5-triazin-2-yl)amino)propyl)-N',N"-dibutyl-N',N"-bis(1,2,2,6,6-pentamethyl-4-piperidinyl)-1,3,5-triazin-2,4,6-triamin (CAS Reg. No. [106990-43-6]), Bis(1,2,2,6,6-pentamethyl-4-piperidinyl)-[[3,5-bis(1,1-dimethylethyl)-4-hydroxyphenyl]methyl]butylmalonat (CAS Reg. No. [63843-89-0]), 2-(2H-Benzotriazol-2-yl)-4,6-bis(1-methyl-1-phenylethyl)phenol, Butandisäuredimethylester, Polymer mit 4-Hydroxy-2,2,6,6-tetramethyl-1-piperidinethanol (CAS Reg. No. [65447-77-0]), (CAS Reg. No. [70321-86-7]), 2,4-Di-tert-butyl-6-(5-chlorobenzotriazol-2-yl)phenol (CAS Reg. No. [3864-99-1]), 2-(2H-Benzotriazol-2-yl)-6-dodecyl-4-methylphenol, verzweigt und linear, (CAS Reg. No. [23328-53-2 / 125304-04-3 / 104487-30-1]), 2-(4,6-Diphenyl-1,3,5-triazin-2-yl)-5-[(hexyl)oxy]-phenol (CAS Reg. No. [174315- 50-2]), 3-(Diaryl)[1,3,5]triazin-2yl)-5-(alkoxy substituiertes)-phenol, N-(2-Ethoxyphenyl)-N'-(2-ethylphenyl)ethandiamid (CAS Reg. No. [23949-66-8]), und/oder Mischungen davon und wobei das wenigstens eine Antioxidans ausgewählt ist aus der Gruppe bestehend aus Pentaerthritoltetrakis(3-(3,5-di-tert-butyl-4-hydroxphenyl)propionat (CAS Reg. No. [6683-19-8]), Octadecyl(3-(3,5-di-tert-butyl-4-hydroxphenyl)propionat (CAS Reg. No. [2082-79-3]), 2-Ethylpentyl-3-(3,5-di-tert-butyl-4-hydroxyphenyl)propanoat (CAS Reg. No. [125643-61-0]), Ethylenbis(oxyethylen)bis-(3-(5-tert-butyl-4-hydroxy-m-tolyl)-propionat) (CAS Reg. No. [36443-68-2]), N,N'-Hexan-1,6-diylbis(3-3,5-di-tert-butyl-4-hydroxphenylpropionamid) (CAS Reg. No. [23128-74]), Tris(2,4-di-tert-butylphenyl)phosphit (CAS Reg. No. [31570-04-4]) und/oder Mischungen davon und wobei das wenigstens eine Metallpigment und das wenigstens eine Lichtschutzmittel in einem Gewichtsverhältnis von 1:11 bis 11:1, vorzugsweise in einem Gewichtsverhältnis von 3:1 bis 1:3, vorliegen.

Bei einer weiteren Ausführungsform betrifft die vorliegende Erfindung eine Kunststoffzusammensetzung, welche wenigstens ein plättchenförmiges Metallpigment, vorzugsweise ein mit Siliziumoxiden, Siliziumhydroxiden und/oder Siliziumoxidhydraten beschichtetes Eisenpigment, in einer Menge aus einem Bereich von 0,1 bis 4,3 Gew.-%, wenigstens ein Lichtschutzmittel sowie wenigstens ein Antioxidans umfasst, wobei die Kunststoffkomponente aus Polystyrol (PS), SAN, HIPS, Acrylnitril/Butadien/Styrol (ABS), ASA, anderen Styrolcopolymeren, Polycarbonat, Polymerblends wie PC/ABS oder PC/ASA, Polyoxymethylen (POM), Polyamid (PA6, PA6.6, PA11, PA12, etc.), Polyester wie PET, PBT, Polyurethane, thermoplasticshe Polyurethane (TPU), Polymethylmethacrylat (PMMA) sowie anderen Acrylatpolymeren, Acrylatcopolymeren oder anderen technischen Thermoplasten besteht, wobei das wenigstens eine Lichtschutzmittel ausgewählt ist aus der Gruppe bestehend aus Poly[[6-[(1,1,3,3-tetramethylbutyl)amino]-1,3,5-triazin-2,4-diyl][(2,2,6,6-tetramethyl-4-piperidinyl)imino]-1,6-hexandiyl[(2,2,6,6-tetramethyl-4-piperidinyl)imino]]) (CAS Reg. No. [71878-19-8]), Bis(2,2,6,6-Tetramethylpiperid-4-yl)sebacat (CAS Reg. No. [52829-07-9]), 1,3,5-Triazine-2,4,6-triamine, N,N"'-1,2-Ethandiylbis(N-(3-((4,6-bis(butyl(1,2,2,6,6-pentamethyl-4-piperidinyl)amino)-1,3,5-triazin-2-yl)amino)propyl)-N',N"-dibutyl-N',N"-bis(1,2,2,6,6-pentamethyl-4-piperidinyl)-1,3,5-triazin-2,4,6-triamin (CAS Reg. No. [106990-43-6]), Bis(1,2,2,6,6-Pentamethyl-4-piperidinyl)-[[3,5-bis(1,1-dimethylethyl)-4-hydroxyphenyl]methyl]butylmalonat (CAS Reg. No. [63843-89-0]), 2-(2H-Benzotriazol-2-yl)-4,6-bis(1-methyl-1-phenylethyl)phenol, Butandisäuredimethylester, Polymer mit 4-Hydroxy-2,2,6,6-tetramethyl-1-piperidinethanol (CAS Reg. No. [65447-77-0]), (CAS Reg. No. [70321-86-7]), 2,4-Di-tert-butyl-6-(5-chlorobenzotriazol-2-yl)phenol (CAS Reg. No. [3864-99-1]), 2-(2H-Benzotriazol-2-yl)-6-dodecyl-4-methylphenol, verzweigt und linear, (CAS Reg. No. [23328-53-2 / 125304-04-3 / 104487-30-1]), 2-(4,6-Diphenyl-1,3,5-triazin-2-yl)-5-[(hexyl)oxy]-phenol (CAS Reg. No. [174315- 50-2]), 3-(Diaryl)[1 ,3,5]triazin-2yl)-5-(alkoxy substituiert)-phenol, N-(2-Ethoxyphenyl)-N'-(2-ethylphenyl)-ethandiamid (CAS Reg. No. [23949-66-8]), und/oder Mischungen davon und wobei das wenigstens eine Antioxidans ausgewählt ist aus der Gruppe bestehend aus Pentaerthritoltetrakis(3-(3,5-di-tert-butyl-4-hydroxphenyl)propionat (CAS Reg. No. [6683-19-8]), Octadecyl(3-(3,5-di-tert-butyl-4-hydroxphenyl)propionat (CAS Reg. No. [2082-79-3]), 2-Ethylpentyl-3-(3,5-di-tert-butyl-4-hydroxyphenyl)propanoat (CAS Reg. No. [125643-61-0]), Ethylenbis(oxyethylen)bis-(3-(5-tert-butyl-4-hydroxy-m-tolyl)-propionat) (CAS Reg. No. [36443-68-2]), N,N'-Hexan-1,6-diylbis(3-3,5-di-tert-butyl-4-hydroxphenylpropionamid) (CAS Reg. No. [23128-74]), Tris(2,4-di-tert-butylphenyl)phosphit (CAS Reg. No. [31570-04-4]), und/oder Mischungen davon und wobei das wenigstens eine Lichtschutzmittel und das wenigstens eine Antioxidans in einem Gewichtsverhältnis von 11:1 bis 1:11 vorliegen.

Bei einer weiteren Ausführungsform betrifft die vorliegende Erfindung eine Kunststoffzusammensetzung, welche wenigstens ein plättchenförmiges Metallpigment, vorzugsweise ein mit Siliziumoxiden, Siliziumhydroxiden und/oder Siliziumoxidhydraten beschichtetes Eisenpigment, aus einem Bereich von 0,01 bis 8,9 Gew.-%, wenigstens ein Lichtschutzmittel sowie wenigstens ein Antioxidans umfasst, wobei die Kunststoffkomponente aus Polyvinylchlorid (PVC) und anderen Vinylchlorid-basierten Polymeren besteht, wobei das wenigstens eine Lichtschutzmittel ausgewählt ist aus der Gruppe bestehend aus 2-(2H-benzotriazol-2-yl)-p-cresol (CAS Reg. No. [2440-22-4]), 2-(5-Chloro-2H-benzotriazol-2-yl)-6-(1,1-dimethylethyl)-4-methyl-phenol (CAS Reg. No. [3896-11-5]), 2,4-Di-tert-butyl-6-(5-chlorobenzotriazol-2-yl)phenol (CAS Reg. No. [3864-99-1]), 2-(2H-Benzotriazol-2-yl)-4,6-ditertpentylphenol (CAS Reg. No. [25973-55-1]), 2-(2H-Benzotriazol-2-yl)-6-dodecyl-4-methylphenol, verzweigt und linear (CAS Reg. No. [23328-53-2 / 125304-04-3 / 104487-30-1]), N-(2-Ethoxyphenyl)-N'-(2-ethylphenyl)-Ethandiamid (CAS Reg. No. [23949-66-8]), 2-Hydroxy-4-(n-octyloxy)benzophenon (CAS Reg. No. [1843-05-6]), und/oder Mischungen davon und wobei das wenigstens eine Antioxidans ausgewählt ist aus der Gruppe bestehend aus Alkyl-Zinn-Stabilisatoren bzw. Organo-Zinn-Stabilisatoren und/oder Mischungen davon und wobei das wenigstens eine Lichtschutzmittel und das wenigstens eine Antioxidans in einem Gewichtsverhältnis von 11:1 bis 1:11 vorliegen.

Bei einer weiteren Ausführungsform betrifft die vorliegende Erfindung eine Kunststoffzusammensetzung, welche wenigstens ein plättchenförmiges Metallpigment, vorzugsweise ein mit Siliziumoxiden, Siliziumhydroxiden und/oder Siliziumoxidhydraten beschichtetes Eisenpigment, aus einem Bereich von 0,01 bis 7,2 Gew.-%, wenigstens ein Lichtschutzmittel sowie wenigstens ein Antioxidans umfasst, wobei die Kunststoffkomponente aus Polyvinylchlorid (PVC), und anderen Vinylchlorid-basierten Polymeren besteht, wobei das wenigstens eine Lichtschutzmittel ausgewählt ist aus der Gruppe bestehend aus 2-(2H-Benzotriazol-2-yl)-p-cresol (CAS Reg. No. [2440-22-4]), 2-(5-Chloro-2H-benzotriazol-2-yl)-6-(1,1-dimethylethyl)-4-methyl-phenol (CAS Reg. No. [3896-11-5]), 2,4-Di-tert-butyl-6-(5-chlorobenzotriazol-2-yl)phenol (CAS Reg. No. [3864-99-1]), 2-(2H-Benzotriazol-2-yl)-4,6-ditertpentylphenol (CAS Reg. No. [25973-55-1]), 2-(2H-Benzotriazol-2-yl)-6-dodecyl-4-methylphenol, verzweigt und linear (CAS Reg. No. [23328-53-2 / 125304-04-3 / 104487-30-1]), N-(2-Ethoxyphenyl)-N'-(2-ethylphenyl)-ethandiamid (CAS Reg. No. [23949-66-8]), 2-Hydroxy-4-(n-octyloxy)benzophenon (CAS Reg. No. [1843-05-6]), und/oder Mischungen davon und wobei das wenigstens eine Antioxidans ausgewählt ist aus der Gruppe bestehend aus Alkyl-Zinn-Stabilisatoren bzw. Organo-Zinn-Stabilisatoren, und/oder Mischungen davon und wobei das wenigstens eine Metallpigment und das wenigstens eine Lichtschutzmittel in einem Gewichtsverhältnis von 1:11 bis 11:1, vorzugsweise in einem Gewichtsverhältnis von 6:1 bis 1:6, vorliegen.

### Beispiele

Die folgenden Beispiele sollen die Erfindung näher erläutern, ohne sie jedoch zu beschränken. Alle Prozentangaben sind als Gew.-% zu verstehen.

### I Herstellung der erfindungsgemäßen Kunststoffzusammensetzungen sowie der Kunststoffzusammensetzungen der Vergleichsbeispiele

### Beispiel

Das Pigment der Beispiele bzw. Vergleichsbeispiele wurde mit der jeweils eingesetzten Kunststoffkomponente gemäß Tabelle 1 gemischt und extrudiert. Das so gewonnene Masterbatch wurde im Spritzgussverfahren zu Platten (Fläche 100 x 70mm; Dicke 2mm) verarbeitet.

### Zur Herstellung eines 10 Gew.-%igen Masterbatch wurde wie folgt verfahren:

### Pigment in Pulverform:

870 g des jeweiligen Kunststoffs in Granulatform, 100 g des jeweiligen pulverförmigen Pigments, 20 g des jeweiligen Lichtschutzmittels und 10 g des jeweiligen Antioxidans wurden in einem Taumelmischer vermischt und nachfolgend in einem Doppelschneckenextruder (Fa. Labtech, Bangkok; Durchmesser 20mm, 28 L/D) bei einer Verarbeitungstemperatur von ca. 230°C zu einem Granulat verarbeitet.

### Pigment in Pastenform:

845 g des jeweiligen Kunststoffs in Granulatform, 125 g der jeweiligen Pigmentpaste (mit einem Pigmentgehalt von 80 Gew.-%, bezogen auf das Gesamtgewicht der Paste), 20 g des jeweiligen Lichtschutzmittels und 10 g des jeweiligen Antioxidans wurden in einem Taumelmischer vermischt und nachfolgend in einem Doppelschneckenextruder (Fa. Labtech, Bangkok; Durchmesser 20mm, 28 L/D) bei einer Verarbeitungstemperatur von ca. 230°C zu einem Granulat verarbeitet.

### Pigment in Pelletform:

845 g des jeweiligen Kunststoffs in Granulatform, 125 g der jeweiligen Pigmentpräparation (Pellet) (mit einem Pigmentgehalt von 80 Gew.-%, bezogen auf das Gesamtgewicht des Pellets), 20 g des jeweiligen Lichtschutzmittels und 10 g des jeweiligen Antioxidans wurden in einem Taumelmischer vermischt und nachfolgend in einem Doppelschneckenextruder (Fa. Labtech, Bangkok; Durchmesser 20mm, 28 L/D) bei einer Verarbeitungstemperatur von ca. 230°C zu einem Granulat verarbeitet.

Wird bei der Herstellung des Masterbatch zusätzlich ein Farbmittel zugesetzt, wird die jeweilige Kunststoffkomponente anteilig reduziert.

Das so erhaltene Masterbatch-Granulat wurde auf einen Gehalt von 5,0 Gew.-%, 2,5 Gew.-%, 1 Gew.-%, 0,5 Gew.-%, 0,25 Gew.-% und 0,1 Gew.-% Pigment, bezogen auf den Gewichtsanteil der Platte, verdünnt. Dieses Masterbatch-Granulat wurde anschließend mittels einer Spritzgussmaschine (Arburg 221K-75-250) bei der jeweiligen stoffspezifischen Verarbeitungstemperatur (z.B. PP 260°C) zu Platten mit den oben genannten Abmessungen verarbeitet.
Beispiele 1, 2, 9 bis 11, 17 bis 19, 23, 24, 26, 27, 29 bis 37 und 39 sind erfindungsgemäß und Beispiele 3 bis 8, 12 bis 16, 20 bis 22, 25, 28, 38 und 40 sind Referenzbeispiele.

**Tabelle 1**

| Beispiel/ Vergleichsbeispiel | Pigment | Kunststoffkomponente/ Lichtschutzmittel/ Antioxidans | Verarbeitungstemperatur |
|---|---|---|---|
| Beispiel 1 | Plättchenförmiges SiO₂-beschichtetes Eisenpigment; D₅₀ = 15 - 21 µm, 80 Gew.-% Paste in medizinischem Weißöl | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel 2 | Plättchenförmiges Eisenpigment, D₅₀ = 12 µm, 80 Gew.-% Paste in medizinischem Weißöl | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel 3 | Plättchenförmiges SiO₂-beschichtets Aluminiumpigment; D₅₀ = 18 µm, Pulver | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel 4 | Plättchenförmiges Aluminiumpigment; D₅₀ = 13 µm, Pulver | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel 5 | Plättchenförmiges SiO₂-beschichtets Aluminiumpigment mit Hämatit in SiO₂-Matrix eingelagert; D₅₀ = 49 µm, Pulver | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel6 | Plättchenförmiges SiO₂-beschichtets Aluminiumpigment mit TiO₂ in SiO₂-Matrix eingelagert; D₅₀ = 49 µm, Pulver | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel7 | Plättchenförmiges SiO₂-beschichtets Aluminiumpigment mit ZnS in SiO₂-Matrix eingelagert; D₅₀ = 49 µm, Pulver | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel8 | Plättchenförmiges SiO₂-beschichtets Aluminiumpigment mit TiO₂ und ZnS in SiO₂-Matrix eingelagert; D₅₀ = 49 µm, Pulver | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel 9 | Plättchenförmiges Edelstahlpigment, D₅₀ = 30 - 40 µm, 80 Gew.-% Paste in medizinischem Weißöl | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel 10 | Plättchenförmiges SiO₂-beschichtetes Eisenpigment; D₅₀ = 15 - 21 µm, Pulver | Polyethylen (LDPE 410E; Fa. Dow)/ Hostavin N30 [202483-55-4] (Fa. Clariant)/ Hostanox O16 [2082-79-3] (Fa. Clariant) | 230°C |
| Beispiel 11 | Plättchenförmiges Eisenpigment, D₅₀ = 12 µm, Paste | Polyethylen(LDPE 410E; Fa. Dow)/ Hostavin N30 [202483-55-4] (Fa. Clariant)/ Hostanox O16 [2082-79-3] (Fa. Clariant) | 230°C |
| Beispiel 12 | Plättchenförmiges SiO₂-beschichtets Aluminiumpigment; D₅₀ = 18 µm, Pulver | Polyethylen(LDPE 410E; Fa. Dow)/ Hostavin N30 [202483-55-4] (Fa. Clariant)/ Hostanox O16 [2082-79-3] (Fa. Clariant) | 230°C |
| Beispiel 13 | Plättchenförmiges SiO₂-beschichtets Aluminiumpigment mit Hämatit in SiO₂-Matrix eingelagert; D₅₀ = 49 µm, Pulver | Polyethylen (LDPE 410E; Fa. Dow)/ Hostavin N30 [202483-55-4] (Fa. Clariant)/ Hostanox O16 [2082-79-3] (Fa. Clariant) | 230°C |
| Beispiel 14 | Plättchenförmiges SiO₂-beschichtets Aluminiumpigment mit TiO₂ in SiO₂-Matrix eingelagert; D₅₀ = 49 µm, Pulver | Polyethylen (LDPE 410E; Fa. Dow)/ Hostavin N30 [202483-55-4] (Fa. Clariant)/ Hostanox O16 [2082-79-3] (Fa. Clariant) | 230°C |
| Beispiel 15 | Plättchenförmiges SiO₂-beschichtets Aluminiumpigment mit ZnS in SiO₂-Matrix eingelagert; D₅₀ = 49 µm | Polyethylen (LDPE 410E; Fa. Dow)/ Hostavin N30 [202483-55-4] (Fa. Clariant)/ Hostanox O16 [2082-79-3] (Fa. Clariant) | 230°C |
| Beispiel 16 | Plättchenförmiges SiO₂-beschichtets Aluminiumpigment mit TiO₂ und ZnS in SiO₂-Matrix eingelagert; D₅₀ = 49 µm | Polyethylen (LDPE 410E; Fa. Dow)/ Hostavin N30 [202483-55-4] (Fa. Clariant)/ Hostanox O16 [2082-79-3] (Fa. Clariant) | 230°C |
| Beispiel 17 | Plättchenförmiges SiO₂-beschichtets Eisenpigment mit Hämatit in SiO₂-Matrix eingelagert; D₅₀ = 49 µm | Polyethylen (LDPE 410E; Fa. Dow)/ Hostavin N30 [202483-55-4] (Fa. Clariant)/ Hostanox O16 [2082-79-3] (Fa. Clariant) | 230°C |
| Beispiel 18 | Plättchenförmiges SiO₂-beschichtetes Eisenpigment; D₅₀ = 15 - 21 µm | Polyvinylchlorid (SOLVIN 264PC; Fa. Solvin SA, Brüssel)/ Hostavin VSU [23949-66-8] / Hostanox 245 [36443-68-2], beide Fa. Clariant | 160°C |
| Beispiel 19 | Plättchenförmiges Eisenpigment, D₅₀ = 12 µm, 80 Gew.-% Paste in medizinischem Weißöl | Polyvinylchlorid (SOLVIN 264PC; Fa. Solvin SA, Brüssel)/ Hostavin VSU [23949-66-8] / Hostanox 245 [36443-68-2], beide Fa. Clariant | 160°C |
| Beispiel 20 | Plättchenförmiges SiO₂-beschichtets Aluminiumpigment; D₅₀ = 18 µm, Pulver | Polyvinylchlorid (SOLVIN 264PC; Fa. Solvin SA, Brüssel)/ Hostavin VSU [23949-66-8] / Hostanox 245 [36443-68-2], beide Fa. Clariant | 160°C |
| Beispiel 21 | Plättchenförmiges SiO₂-beschichtets Aluminiumpigment mit Hämatit in SiO₂-Matrix eingelagert; D₅₀ = 49 µm | Polyvinylchlorid (SOLVIN 264PC; Fa. Solvin SA, Brüssel)/ Hostavin VSU [23949-66-8] / Hostanox 245 [36443-68-2], beide Fa. Clariant | 160°C |
| Beispiel 22 | Plättchenförmiges SiO₂-beschichtets Aluminiumpigment mit TiO₂ in SiO₂-Matrix eingelagert; D₅₀ = 49 µm | Polyvinylchlorid (SOLVIN 264PC; Fa. Solvin SA, Brüssel)/ Hostavin VSU [23949-66-8] / Hostanox 245 [36443-68-2], beide Fa. Clariant | 160°C |
| Beispiel 23 | Plättchenförmiges SiO₂-beschichtetes Eisenpigment; D₅₀ = 15 - 21 µm | Polycarbonat (CALIBRE 201, Fa. Dow)/ Tinuvin 1577 [174315-50-2] Fa. BASF SE/ Irgafos 168 [31570-04-4] Fa. BASF SE | 290°C |
| Beispiel 24 | Plättchenförmiges Eisenpigment, D₅₀ = 12 µm | Polycarbonat (CALIBRE 201, Fa. Dow)/ Tinuvin 1577 [174315-50-2] Fa. BASF SE/ Irgafos 168 [31570-04-4] Fa. BASF SE | 290°C |
| Beispiel 25 | Plättchenförmiges SiO₂-beschichtets Aluminiumpigment; D₅₀ = 18 µm | Polycarbonat(CALIBRE 201, Fa. Dow)/ Tinuvin 1577 [174315-50-2] Fa. BASF SE/ Irgafos 168 [31570-04-4] Fa. BASF SE | 290°C |
| Beispiel 26 | Plättchenförmiges SiO₂-beschichtetes Eisenpigment; D₅₀ = 15 - 21 µm | Polystyrol (Styron 678, Fa. Styron, Niederlande)/ Hostavin N845 [86403-32-9]/ Hostanox 245 [36443-68-2], beide Fa. Clariant | 250°C |
| Beispiel 27 | Plättchenförmiges Eisenpigment, D₅₀ = 12 µm | Polystyrol (Styron 678, Fa. Styron, Niederlande)/ Hostavin N845 [86403-32-9]/ Hostanox 245 [36443-68-2], beide Fa. Clariant | 250°C |
| Beispiel 28 | Plättchenförmiges SiO₂-beschichtets Aluminiumpigment; D₅₀ = 18 µm | Polystyrol (Styron 678, Fa. Styron, Niederlande)/ Hostavin N845 [86403-32-9]/ Hostanox 245 [36443-68-2], beide Fa. Clariant | 250°C |
| Beispiel 29 | Plättchenförmiges Edelstahlpigment, 80 Gew.-% Paste in medizinischem Weißöl | Polystyrol (Styron 678, Fa. Styron, Niederlande)/ Hostavin N845 [86403-32-9]/ Hostanox 245 [36443-68-2], beide Fa. Clariant | 250°C |
| Beispiel 30 | Plättchenförmiges SiO₂-beschichtets Eisenpigment mit Hämatit in SiO₂-Matrix eingelagert; D₅₀ = 49 µm | Polystyrol (Styron 678, Fa. Styron, Niederlande)/ Hostavin N845 [86403-32-9]/ Hostanox 245 [36443-68-2], beide Fa. Clariant | 250°C |
| Beispiel 31 | Plättchenförmiges SiO₂-beschichtetes Eisenpigment; D₅₀ = 15 - 21 µm und 0,2 Gew.-% PV-Fast Yellow H9G (Fa. Clariant) | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel 32 | Plättchenförmiges SiO₂-beschichtetes Eisenpigment; D₅₀ = 15 - 21 µm und 0,2 Gew.-% PV-Fast Yellow H3R (Fa. Clariant) | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel 33 | Plättchenförmiges SiO₂-beschichtetes Eisenpigment; D₅₀ = 15 - 21 µm und 0,2 Gew.-% PV-Fast Red D3G (Fa. Clariant) | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel 34 | Plättchenförmiges SiO₂-beschichtetes Eisenpigment; D₅₀ = 15 - 21 µm und 0,2 Gew.-% PV-Fast Violet RL (Fa. Clariant) | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel 35 | Plättchenförmiges SiO₂-beschichtetes Eisenpigment; D₅₀ = 15 - 21 µm und 0,2 Gew.-% PV-Fast Blue A4R (Fa. Clariant) | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel 36 | Plättchenförmiges SiO₂-beschichtetes Eisenpigment; D₅₀ = 15 - 21 µm und 0,2 Gew.-% PV-Fast GreenGG01 (Fa. Clariant) | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel 37 | Plättchenförmiges SiO₂-beschichtetes Eisenpigment; D₅₀ = 15 - 21 µm und 0,1 Gew.-% Printex P (Fa. Orion) | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel 38 | Plättchenförmiges Aluminiumpigment mit Bindemittel auf Polyolefinbasis in Pelletform, D₅₀ = 15- 17 µm | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel 39 | Plättchenförmiges Eisenpigment mit Bindemittel auf Polyolefinbasis in Pelletform, D₅₀ = 12 µm | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Beispiel 40 | Plättchenförmiges SiO₂-beschichtets Aluminiumpigment mit Kupferchromit in SiO₂-Matrix eingelagert; D₅₀ = 49 µm, Pulver | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Vergleichsbeispiel 1 | Printex P (Fa. Orion Engineered Carbons) | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Vergleichsbeispiel 2 | Sicopal Black L 0095 (Fa. BASF SE) | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Vergleichsbeispiel 3 | Shepherd Black 430 (Fa. Shepherd) | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Vergleichsbeispiel 4 | Iriodin 600 (Fa. Merck) | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |
| Vergleichsbeispiel 5 | Printex P (Fa. Orion Engineered Carbons) und Kronos 2222 (Fa. Kronos) | Polypropylen (R771-10; Fa. DOW, Deutschland, Wesseling)/ Hostavin N30 [202483-55-4] (Fa. Clariant)/ Hostanox O10 [6683-19-8] (Fa. Clariant) | 260°C |

Die in Tabelle 1 eingesetzten Metallpigmente können hergestellt werden gemäß EP 1 251 152A1, EP 1 251 153A1, EP 2 157 138A1 oder WO 2008/155038 A2. Die in Tabelle 1 eingesetzten plättchenförmigen Aluminium- oder Edelstahlpigmente können aus den für Kunststoffe geeigneten Pigmenten der Produktgruppen STAPA, STANDART oder STAY STEEL, jeweils Fa. ECKART GmbH, ausgewählt werden. SiO₂-beschichtet bedeutet, dass die Metallpigmente mit einer Schicht aus Siliziumoxiden, Siliziumhydroxiden und Siliziumoxidhydraten belegt sein können.

### Beispiel 41: Überführung der erfindungsgemäßen Kunststoffzusammensetzung in eine kompaktierte Form (Pellet)

700 g der Kunststoffzusammensetzung aus Beispiel 1 wird mit 300 g Polyolefin-Wachs Licocene PP 6102 der Fa. Clariant in einem Taumel-Mischer homogen gemischt. Diese Mischung wird in einem Doppelschneckenextruder (Fa. Labtech, Bangkok; Durchmesser 20mm, 28 L/D) bei einer Temperatur von 140°C extrudiert. Das Extrudat ist ein 70%iges Pellet und kann nach dem Abkühlen direkt zur Kunststoffeinfärbung (Extrusion, Spritzguss) verwendet werden.

### II Charakterisierung der Kunststoffzusammensetzungen der Beispiele und Vergleichsbeispiele

### IIa Messung der diffusen Reflexion im Bereich von 280 bis 2500 nm

Die Platten der Beispiele bzw. der Vergleichsbeispiele wurden mittels eines UV-Vis-NIR Spectrometer (Perkin Elmer, Lambda 1050) im Wellenlängenbereich 250 nm bis 2500 nm vermessen. Dabei diente eine PP-Platte ohne Pigmentzusatz als Referenz. Die Auswertung erfolgte gemäß ASTM G173 - 03.

**Tabelle 2**

| Beispiel/Vergleichsbeispiel | Konzentration (Gew.-%) | Totale solare Reflexion (%) | Deckfähigkeit |
|---|---|---|---|
| Beispiel 1 | 0,1 | 23 | Nicht deckend |
| | 0,25 | 25 | deckend |
| | 0,5 | 26 | deckend |
| | 1,0 | 28 | deckend |
| | 2,5 | 30 | deckend |
| | 5,0 | 33 | deckend |
| | 10,0 | 35 | deckend |
| Beispiel 3 | 0,1 | 43 | Nicht deckend |
| | 0,25 | 47 | deckend |
| | 0,5 | 50 | deckend |
| | 1,0 | 53 | deckend |
| | 2,5 | 58 | deckend |
| | 5,0 | 61 | deckend |
| | 10,0 | 63 | deckend |
| Beispiel 40 | 0,1 | 11 | Nicht deckend |
| | 0,25 | 12 | deckend |
| | 0,5 | 13 | deckend |
| | 1,0 | 14 | deckend |
| | 2,5 | 15 | deckend |
| | 5,0 | 15 | deckend |
| | 10,0 | 16 | deckend |
| Vergleichsbeispiel 1 | 0,01 | 4,8 | Nicht deckend |
| | 0,02 | 4,4 | Nicht deckend |
| | 0,03 | 4,4 | deckend |
| | 0,04 | 4,4 | deckend |
| | 0,05 | 4,4 | deckend |
| | 0,075 | 4,5 | deckend |
| | 0,10 | 4,5 | deckend |
| Vergleichsbeispiel 2 | 0,1 | 16 | Nicht deckend |
| | 0,25 | 16 | Nicht deckend |
| | 0,5 | 16 | deckend |
| | 1,0 | 16 | deckend |
| | 2,5 | 17 | deckend |
| | 5,0 | 17 | deckend |
| | 10,0 | 18 | deckend |
| Vergleichsbeispiel 3 | 0,1 | 8 | Nicht deckend |
| | 0,25 | 7 | deckend |
| | 0,5 | 6 | deckend |
| | 1,0 | 6 | deckend |
| | 2,5 | 6 | deckend |
| | 5,0 | 6 | deckend |
| | 10,0 | 7 | deckend |
| Vergleichsbeispiel 4 | 0,1 | 7 | Nicht deckend |
| | 0,25 | 6 | Nicht deckend |
| | 0,5 | 6 | deckend |
| | 1,0 | 6 | deckend |
| | 2,5 | 6 | deckend |
| | 5,0 | 6 | deckend |
| | 10,0 | 6 | deckend |

Die Kunststoffzusammensetzungen der Beispiele 1 (erfindungsgemäß) sowie 3 und 40 (Referenzbeispiele) zeichnen sich im Unterschied zu den Kunststoffzusammensetzungen der Vergleichsbeispiele durch ihre außergewöhnlich hohe totale solare Reflexion (TSR), auch bei geringer Konzentration an eingesetztem Metallpigment, aus. Gleichzeitig zeigt die erfindungsgemäße Kunststoffzusammensetzung auch bei geringer Konzentration an eingesetztem Metallpigment eine äußerst hohe Deckung auf.

Diese spezielle Charakteristik ermöglicht insbesondere die Herstellung von dünnen, solar reflektierenden und gleichzeitig deckenden Applikationen, wie z.B. Folien in einer Dicke von 10 bis 100 µm, u.a. für Agrar-, Gewächshaus- oder Wärmeschutzfolien. In Applikationen mit einer Dicke von > 0,5 mm kann auch bei sehr geringen Zusatzmengen eine extrem gute TSR erreicht werden. Dieser Effekt ist nützlich sowohl im Outdoor-Bereich als auch für Automobilanwendungen wie Fahrzeugarmaturen und andere Kunststoffteile im Fahrzeuginnenbereich, welche in hohem Maß dem Sonnenlicht ausgesetzt sind.

### IIb Deckfähigkeit

Die Deckfähigkeit eingefärbter Kunststoffplatten aus den Beispielen und Vergleichsbeispielen (alle Dicke: 2mm) wurde visuell beurteilt. Hierbei wurden die Kunststoffplatten so auf die Schwarz-Weiß-Deckungskarte (Byko-Chart 2853, Fa. Byk Gardner) gelegt, dass die Hälfte der Kunststoffplatte auf schwarzem, die andere Hälfte auf weißem Untergrund zum Liegen kommt.

Ist eine Unterscheidung des schwarzen und des weißen Teils der Karte durch die Kunststoffplatte hindurch nicht mehr möglich, wurde die Kunststoffplatte als deckend eingestuft. Die Ergebnisse sind in Tabelle 2 dargestellt.

### IIc Teilchengrößenmessung

Die Größenverteilungskurve der Metalleffektpigmente und Pigmente der Vergleichsbeispiele wurde mit einem Gerät der Fa. Quantachrome (Gerät: Cilas 1064) gemäß Herstellerangaben vermessen. Hierzu wurden ca. 1,5 g des Pigmentes in Isopropanol suspendiert, 300 Sekunden im Ultraschallbad (Gerät: Sonorex IK 52, Fa. Bandelin) behandelt und anschließend mittels einer Pasteurpipette in die Probenvorbereitungszelle des Messgerätes gegeben und mehrmals vermessen. Aus den einzelnen Messergebnissen wurden die resultierenden Mittelwerte gebildet. Die Auswertung der Streulichtsignale erfolgte dabei nach der Fraunhofer Methode.

Unter der mittleren Größe D₅₀ wird im Rahmen dieser Erfindung der D₅₀-Wert der Summenhäufigkeitsverteilung der volumengemittelten Größenverteilungsfunktion, wie sie durch Laserbeugungsmethoden erhalten werden, verstanden. Der D₅₀-Wert gibt an, dass 50 % der Metallpigmente einen Durchmesser aufweisen, der gleich oder kleiner als der angegebene Wert, beispielsweise 20 µm, ist. Entsprechend gibt der D₉₀-Wert an, dass 90 % der Pigmente einen Durchmesser aufweisen, der gleich oder kleiner als der jeweilige Wert ist. Weiterhin gibt der D₁₀-Wert an, dass 10% der Pigmente einen Durchmesser aufweisen, der gleich oder kleiner als der jeweilige Werte ist.

### IId Aufheizrate der erfindungsgemäßen Kunststoffzusammensetzung

Die Aufheizrate der Kunststoffzusammensetzung wurde analog ASTM D 4803 - 97 (Reapproved 2002) bestimmt.

**Tabelle 3**

| Beispiel/ Vergleichsbeispiel | Konzentration Pigment | Zeit [s] | Temperatur [°C] |
|---|---|---|---|
| Beispiel 1 | 1,0 Gew.-% | 10 | 25 |
| | | 300 | 42 |
| | | 900 | 62 |
| | | 1500 | 71 |
| | | 2000 | 75 |
| | | 3000 | 78 |
| | | 3500 | 79 |
| | | 3998 | 80 |
| Vergleichsbeispiel 4 | 1,0 Gew.-% | 10 | 25 |
| | | 300 | 48 |
| | | 900 | 79 |
| | | 1500 | 90 |
| | | 2000 | 93 |
| | | 3000 | 96 |
| | | 3500 | 97 |
| | | 3998 | 98 |
| Vergleichsbeispiel 5 | 0,5 Gew.-% Printex P/ 0,25 Gew.-% Kronos 2222 | 10 | 25 |
| | | 300 | 48 |
| | | 900 | 76 |
| | | 1500 | 86 |
| | | 2000 | 90 |
| | | 3000 | 94 |
| | | 3500 | 95 |
| | | 3998 | 95 |

Die erfindungsgemäße Kunststoffzusammensetzung gemäß Beispiel 1 erwärmt sich im Unterschied zu den Kunststoffzusammensetzungen aus den Vergleichbeispielen 4 und 5 deutlich weniger stark. Interessant ist dies insbesondere im Hinblick darauf, dass die Kunststoffzusammensetzungen aus Beispiel 1, Vergleichsbeispiel 4 und Vergleichsbeispiel 5 vom menschlichen Auge als dunkel wahrgenommen werden.

## Patentansprüche

1. Kunststoffzusammensetzung,
**dadurch gekennzeichnet,**
**dass** die Kunststoffzusammensetzung wenigstens ein plättchenförmiges Metallpigment in einer Menge aus einem Bereich von 0,01 bis 25 Gew.-%, wenigstens ein Lichtschutzmittel in einer Menge aus einem Bereich von 0,01 bis 10 Gew.-% und wenigstens ein Antioxidans in einer Menge aus einem Bereich von 0,01 bis 2 Gew.-%, jeweils bezogen auf den Gewichtsanteil der Kunststoffzusammensetzung, umfasst, wobei das plättchenförmige Metallpigment ein Eisen- und/oder Eisenlegierungspigment ist.

2. Kunststoffzusammensetzung nach Anspruch 1,
**dadurch gekennzeichnet,**
**dass** das plättchenförmige Metallpigment mit einer Siliziumoxid-, Siliziumhydroxid- und/oder Siliziumoxidhydratschicht beschichtet ist.

3. Kunststoffzusammensetzung nach einem der vorstehenden Ansprüche,
**dadurch gekennzeichnet,**
**dass** das plättchenförmige Metallpigment ein Eisenpigment ist, welches mit einer Siliziumoxid-, Siliziumhydroxid- und/oder Siliziumoxidhydratschicht beschichtet ist, wobei der Eisenkern des Eisenpigments eine mittlere Dicke aus einem Bereich von 20 bis unter 100 nm aufweist.

4. Kunststoffzusammensetzung nach einem der vorstehenden Ansprüche,
**dadurch gekennzeichnet,**
**dass** die mittlere Teilchengröße D₅₀ des Metallpigments in einem Bereich von 1 bis 100 µm liegt.

5. Kunststoffzusammensetzung nach einem der vorstehenden Ansprüche,
**dadurch gekennzeichnet,**
**dass** die Kunststoffkomponente ausgewählt ist aus der Gruppe, bestehend aus Polypropylen (PP), PP-Copolymeren, Polyethylen (PE), PE-Copolymeren, HDPE, LDPE, LLDPE, Polystyrol (PS), Styrol/ Acrylnitril (SAN), hochschlagfestes Polystyrol (HIPS), Acrylnitril/Butadien/Styrol (ABS), Acrylnitril/Styrol/Acrylester(ASA), Polycarbonat (PC), Polymerblends aus PC/ABS, Polymerblends aus PC/ASA, Polyoxymethylen (POM), Polyamid, Polyester, Polyurethan, Polymethylmethacrylat (PMMA), und Mischungen davon.

6. Kunststoffzusammensetzung nach einem der vorstehenden Ansprüche,
**dadurch gekennzeichnet,**
**dass** das Lichtschutzmittel ein sterisch gehindertes Amin (HALS) und/oder ein UV-Absorber ist.

7. Verfahren zur Herstellung der Kunststoffzusammensetzung nach einem der Ansprüche 1 bis 6
**dadurch gekennzeichnet,**
**dass** das Verfahren die folgenden Schritte umfasst:
a) Mischen des wenigstens einen Metallpigments, des wenigstens einen Lichtschutzmittels und des wenigstens einen Antioxidans mit einer Kunststoffkomponente,
b) Extrudieren dieser Mischung,
c) Spritzgießen des Extrudats aus Schritt b) zu Platten.

8. Kunststoffzusammensetzung nach einem der Ansprüche 1 bis 6,
**dadurch gekennzeichnet,**
**dass** die Kunststoffzusammensetzung in granulierter Form vorliegt.

9. Verwendung der Kunststoffzusammensetzung nach einem der Ansprüche 1 bis 6 als Folie, Platte oder Profil.

10. Verwendung wenigstens eines plättchenförmigen, mit Siliziumoxiden, Siliziumhydroxiden und/oder Siliziumoxidhydraten beschichteten Eisenpigmentes in einer Kunststoffzusammensetzung nach einem der Ansprüche 1 bis 6.

## Claims

1. Plastics composition,
**characterised in that**
the plastics composition comprises at least one platelet-shaped metal pigment in a quantity from a range of from 0.01 to 25 % by weight, at least one light stabiliser in a quantity from a range of from 0.01 to 10 % by weight and at least one antioxidant in a quantity from a range of from 0.01 to 2 % by weight, in each case relative to the proportion by weight of the plastics composition, the platelet-shaped metal pigment being an iron and/or iron alloy pigment.

2. Plastics composition as claimed in claim 1,
**characterised in that**
the platelet-shaped metal pigment is coated with a silicon oxide, silicon hydroxide and/or silicon oxide hydrate layer.

3. Plastics composition as claimed in one of the preceding claims,
**characterised in that**
the platelet-shaped metal pigment is an iron pigment which is coated with a silicon oxide, silicon hydroxide and/or silicon oxide hydrate layer and the iron core of the iron pigment has an average thickness from a range of from 20 to less than 100 nm.

4. Plastics composition as claimed in one of the preceding claims,
**characterised in that**
the average particle size D₅₀ of the metal pigment is in a range of from 1 to 100 µm.

5. Plastics composition as claimed in one of the preceding claims,
**characterised in that**
the plastics component is selected from the group consisting of polypropylene (PP), PP copolymers, polyethylene (PE), PE copolymers, HDPE, LDPE, LLDPE, polystyrene (PS), styrene/acrylonitrile (SAN), high impact polystyrene (HIPS), acrylonitrile/butadiene/styrene (ABS), acrylonitrile/styrene/acrylester (ASA), polycarbonate (PC), polymer blends of PC/ABS, polymer blends of PC/ASA, polyoxymethylene (POM), polyamide, polyester, polyurethane, polymethylmethacrylate PMMA), and mixtures thereof.

6. Plastics composition as claimed in one of the preceding claims,
**characterised in that**
the light stabiliser is a sterically hindered amine (HALS) and/or a UV absorber.

7. Method for producing the plastics composition as claimed in one of claims 1 to 6,
**characterised in that**
the method comprises the following steps:
a) mixing the at least one metal pigment, the at least one light stabiliser and the at least one antioxidant with a plastics component,
b) extruding this mixture,
c) injection moulding the extrudate from step b) to form plates.

8. Plastics composition as claimed in one of claims 1 to 6,
**characterised in that**
the plastics composition is present in granulated form.

9. Use of the plastics composition as claimed in one of claims 1 to 6 as a film, plate or profile.

10. Use of at least one platelet-shaped iron pigment coated with silicon oxides, silicon hydroxides and/or silicon oxide hydrates in a plastics composition as claimed in one of claims 1 to 6.

## Revendications

1. Composition de matières plastiques, **caractérisée en ce que** la composition de matières plastiques comprend au moins un pigment métallique lamellaire en une quantité comprise dans la plage de 0,01 à 25 % en poids, au moins un agent de protection contre la lumière en une quantité comprise dans la plage de 0,01 à 10 % en poids et au moins un antioxydant en une quantité comprise dans la plage de 0,01 à 2 % en poids, chacun par rapport au poids de la composition de matières plastiques, dans laquelle le pigment métallique lamellaire est un pigment de fer et/ou d'un alliage de fer.

2. Composition de matières plastiques selon la revendication 1, **caractérisée en ce que** le pigment métallique lamellaire est revêtu d'une couche d'oxyde de silicium, d'hydroxyde de silicium ou d'oxyde de silicium hydraté.

3. Composition de matières plastiques selon l'une des revendications précédentes, **caractérisée en ce que** le pigment métallique lamellaire est un pigment de fer qui est revêtu d'une couche d'oxyde de silicium, d'hydroxyde de silicium et/ou d'oxyde de silicium hydraté, dans laquelle le noyau de fer du pigment de fer présente une épaisseur moyenne comprise dans la plage de 20 à moins de 100 nm.

4. Composition de matières plastiques selon l'une des revendications précédentes, **caractérisée en ce que** la granulométrie moyenne D₅₀ du pigment métallique est comprise dans la plage de 1 à 100 µm.

5. Composition de matières plastiques selon l'une des revendication précédentes, **caractérisée en ce que** le composant matière plastique est choisi dans le groupe consistant en le polypropylène (PP), les copolymères de PP, le polyéthylène (PE), les copolymères de PE, le PEHD, le PEBD, le PEBDL, le polystyrène (PS), le styrène/acrylonitrile (SAN), le polystyrène choc (HIPS), l'acrylonitrile/butadiène/styrène (ABS), l'acrylonitrile/styrène/ester d'acide acrylique (ASA), le polycarbonate (PC), les mélanges de polymères constitués de PC/ABS, les mélanges de polymères constitués de PC/ASA, le polyoxyméthylène (POM), le polyamide, le polyester, le polyuréthanne, le poly(méthacrylate de méthyle) et les mélanges de ceux-ci.

6. Composition de matières plastiques selon l'une des revendications précédentes, **caractérisée en ce que** l'agent de protection contre la lumière est une amine à empêchement stérique (HALS) et/ou un absorbant UV.

7. Procédé de fabrication d'une composition de matières plastiques selon l'une des revendications 1 à 6, **caractérisé en ce que** le procédé comprend les étapes suivantes :
a) mélanger l'au moins un pigment métallique, l'au moins un agent de protection contre la lumière et l'au moins un antioxydant, avec un composant matière plastique,
b) extruder ce mélange,
c) mouler par injection l'extrudat de l'étape b) pour donner des plaques.

8. Composition de matières plastiques selon l'une des revendications 1 à 6, **caractérisée en ce que** la composition de matières plastiques se présente sous forme granulée.

9. Utilisation de la composition de matières plastiques selon l'une des revendications 1 à 6 sous forme d'une feuille, d'une plaque ou d'un profilé.

10. Utilisation d'au moins un pigment de fer lamellaire, revêtu d'oxydes de silicium, d'hydroxydes de silicium et/ou d'oxydes de silicium hydratés dans une composition de matières plastiques selon l'une des revendications 1 à 6.
